(19) Europäisches Patentamt / European Patent Office / Office européen des brevets

(11) **EP 4 586 708 A1**

(12) **EUROPEAN PATENT APPLICATION**
published in accordance with Art. 153(4) EPC

(43) Date of publication:
**16.07.2025 Bulletin 2025/29**

(21) Application number: **23863547.8**

(22) Date of filing: **08.09.2023**

(51) International Patent Classification (IPC):
**H04W 64/00** $^{(2009.01)}$ **H04W 72/02** $^{(2009.01)}$
**H04W 24/08** $^{(2009.01)}$ **H04W 4/40** $^{(2018.01)}$
**H04L 5/00** $^{(2006.01)}$

(52) Cooperative Patent Classification (CPC):
**H04L 5/00; H04W 4/40; H04W 24/08; H04W 64/00; H04W 72/02**

(86) International application number:
**PCT/KR2023/013485**

(87) International publication number:
**WO 2024/054083 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022 KR 20220114372**

(71) Applicant: **Innovative Technology Lab Co., Ltd.
Seocho-gu, Seoul 06744 (KR)**

(72) Inventor: **YOON, Sung Jun
Seoul 06744 (KR)**

(74) Representative: **Diehl & Partner
Patent- und Rechtsanwaltskanzlei mbB
Erika-Mann-Straße 9
80636 München (DE)**

(54) **METHOD AND DEVICE FOR PERFORMING SIDELINK POSITIONING IN WIRELESS COMMUNICATION SYSTEM**

(57)    A method of performing sidelink positioning in a wireless communication system according to an aspect of the present disclosure may include acquiring sidelink resource pool configuration information, acquiring sidelink positioning reference signal (SL PRS) configuration information, and transmitting an SL PRS based on SL PRS allocation.

**FIG. 26**

EP 4 586 708 A1

## Description

TECHNICAL FIELD

The present disclosure relates to a method and apparatus for performing sidelink positioning in a wireless communication system.

RELATED ART

Device-to-device (D2D) communication represents that a single user equipment (UE) directly communicates with another UE. Direct communication represents that a single UE communicates with another UE under control of a network or without using another network device through determination of the UE itself. The D2D communication may be applied to vehicular communication, which is generally referred to as vehicle-to-everything (V2X). V2X communication may refer to a communication method that exchanges or shares information such as traffic conditions, through communication with road infrastructure and other vehicles while driving. A V2X-based service may include, for example, an autonomous driving service, a remote vehicle control service, an interactive service such as a game, and a high-capacity audio/video service such as augmented reality (AR) and virtual reality (VR). Detailed techniques additionally required for Long Term Evolution (LTE) and new radio (NR) system that are radio access technology (RAT) in a 5G system is under discussion based on performance requirements for supporting various V2X-bsed services through the 5G system.

DETAILED DESCRIPTION

TECHNICAL SUBJECT

A technical subject of the present disclosure relates to a method and device for performing sidelink positioning in a wireless communication system.
An additional technical subject of the present disclosure relates to a method and device for allocating sidelink positioning reference signal (SL PRS) resources.
An additional technical subject of the present disclosure relates to a method and device for allocating an SL PRS based on a bitmap for time resources of a sidelink resource pool.
An additional technical subject of the present disclosure relates to a method and device for allocating an SL PRS based on a period of sidelink resource selected through sensing from a sidelink resource pool.
An additional technical subject of the present disclosure relates to a method and device for allocating an SL PRS based on synchronization signal block (SSB) periodicity.
Technical subjects to be achieved by the present disclosure are not limited to the aforementioned technical subjects and still other technical subjects not described may be clearly understood by one of ordinary skill in the art to which the present disclosure pertains from the following description.

TECHNICAL SOLUTION

A method of performing sidelink positioning in a wireless communication system according to an aspect of the present disclosure may include acquiring sidelink (SL) resource pool configuration information, acquiring sidelink positioning reference signal (SL PRS) configuration information, and transmitting an SL PRS based on SL PRS assignment.
Also, a method of performing sidelink positioning in a wireless communication system according to an aspect of the present disclosure may include selecting SL resources based on SL resource sensing in a sidelink (SL) resource pool, acquiring sidelink positioning reference signal (SL PRS) configuration information, and transmitting an SL PRS based on SL PRS assignment.
Also, a method of performing sidelink positioning in a wireless communication system according to an aspect of the present disclosure may include acquiring synchronization signal block (SSB) configuration information, acquiring sidelink positioning reference signal (SL PRS) configuration information, and transmitting an SL PRS based on SL PRS assignment.

EFFECT

According to the present disclosure, it is possible to provide a method of performing sidelink positioning in a wireless communication system.
According to the present disclosure, it is possible to provide a method of allocating sidelink positioning reference signal (SL PRS) resources.

According to the present disclosure, it is possible to provide a method of allocating an SL PRS based on a bitmap for time resources of a sidelink resource pool.

According to the present disclosure, it is possible to provide a method of allocating an SL PRS based on a period of sidelink resource selected through sensing from a sidelink resource pool.

According to the present disclosure, it is possible to provide a method of allocating an SL PRS based on synchronization signal block (SSB) periodicity.

Effects to be achieved by the present disclosure are not limited to the aforementioned effects and still other technical effects not described may be clearly understood by one of ordinary skill in the art to which the present disclosure pertains from the following description.

BRIEF DESCRIPTION OF DRAWINGS

FIG. 1 illustrates examples of a vehicle-to-everything (V2X) scenario to which the present disclosure may apply.
FIG. 2 illustrates examples of a V2X scenario to which the present disclosure may apply.
FIG. 3 illustrates examples of a V2X scenario to which the present disclosure may apply.
FIG. 4 illustrates examples of a service provided based on a sidelink to which the present disclosure may apply.
FIG. 5 illustrates a new radio (NR) frame structure to which the present disclosure may apply.
FIG. 6 illustrates an NR resource structure to which the present disclosure may apply.
FIG. 7 illustrates an example of a V2X resource pool configuration to which the present disclosure may apply.
FIG. 8 illustrates an example of a V2X resource pool configuration to which the present disclosure may apply.
FIG. 9 illustrates a method of performing positioning based on an observed time difference of arrival (OTDOA) to which the present disclosure may apply.
FIG. 10 illustrates a control plane and user plane configuration diagram for NR positioning protocol (NRPP) to which the present disclosure may apply.
FIG. 11 illustrates a method of performing positioning based on a sidelink sounding reference signal (SL SRS) to which the present disclosure may apply.
FIG. 12 illustrates a method of performing positioning based on an SL SRS using request information to which the present disclosure may apply.
FIG. 13 illustrates a method of performing positioning based on an SL SRS to which the present disclosure may apply.
FIG. 14 illustrates a method of performing positioning based on an SL SRS using request information to which the present disclosure may apply.
FIG. 15 illustrates a method of performing positioning based on an SL SRS to which the present disclosure may apply.
FIG. 16 illustrates a method of performing positioning based on an SL SRS using request information to which the present disclosure may apply.
FIG. 17 illustrates a comb pattern applicable to the present disclosure.
FIG. 18 illustrates a method of performing a cyclic prefix based on a downlink (DL) positioning reference signal (PRS) assignment pattern applicable to the present disclosure.
FIG. 19 illustrates a method of performing a cyclic prefix based on a DL PRS assignment pattern applicable to the present disclosure.
FIG. 20 illustrates a DL PRS resource allocation method applicable to the present disclosure.
FIG. 21 illustrates a structure of an NR sidelink slot to which the present disclosure may apply.
FIG. 22 illustrates NR sidelink resource pool configuration to which the present disclosure may apply.
FIG. 23 is a flowchart illustrating a method of determining an SL PRS allocation period based on a sidelink slot set bitmap of a sidelink resource pool to which the present disclosure may apply.
FIG. 24 illustrates the entire sensing-based resource selection and resource pool configuration to which the present disclosure may apply.
FIG. 25 illustrates a method of performing repeated transmission based on period $P_{reserve}$ to which the present disclosure may apply.
FIG. 26 is a flowchart illustrating a method of determining an SL PRS allocation period based on SL resources selected through SL resource sensing from a sidelink resource pool to which the present disclosure may apply.
FIG. 27 is a flowchart illustrating a method of determining an SL PRS allocation period based on an SSB to which the present disclosure may apply.
FIG. 28 is a diagram illustrating a base station device and a terminal device to which the present disclosure may apply.

BEST MODE

Various examples of the disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

When it is determined that detailed description related to a known configuration or function in describing the examples of the present disclosure, the detailed description is omitted. Also, a part irrelevant to the description of the disclosure is omitted and like reference numerals refer to like elements.

It will be understood that when an element is referred to as being "connected to," "coupled to," or "accessed to" another element, it can be directly connected, coupled, or accessed to the other element or intervening elements may be present. Also, it will be further understood that when an element is described to "comprise/include" or "have" another element, it specifies the presence of still another element, but do not preclude the presence of another element uncles otherwise described.

Further, the terms, such as first, second, and the like, may be used herein to describe elements in the description herein. The terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent that the elements are necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the disclosure.

Herein, elements described in various examples may not be necessarily essential and may be partially selectable. Therefore, an example including a partial set of elements described in an example is also included in the scope of the disclosure. Also, an example that additionally includes another element to elements described in various examples is also included in the scope of the disclosure.

The description described herein is related to a wireless communication network, and an operation performed in the wireless communication network may be performed in a process of controlling a network and transmitting data in a system that controls the wireless communication network (e.g., a base station), or may be performed in a process of transmitting or receiving a signal in a user equipment connected to the wireless communication network.

It is apparent that various operations performed for communication with a terminal in a network including a base station and a plurality of network nodes may be performed by the base station or by other network nodes in addition to the base station. Here, the term 'base station (BS)' may be interchangeably used with other terms, for example, a fixed station, a Node B, eNodeB (eNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes a meaning of transmitting or receiving information or a signal through the corresponding channel. For example, transmitting a control channel indicates transmitting control information or a signal through the control channel. Likewise, transmitting a data channel indicates transmitting data information or a signal through the data channel.

The definitions of abbreviations used herein as below.

D2D: Device to Device (communication)
DCI: Downlink Control Information
V2X: Vehicle to X(everything)
V2V: Vehicle to Vehicle
V2P: Vehicle to Pedestrian
V2I/N: Vehicle to Infrastructure/Network
SL: Sidelink
SCI: Sidelink Control Information
SFCI: Sidelink Feedback Control Information
PSSCH: Physical Sidelink Shared Channel
PSBCH: Physical Sidelink Broadcast Channel
PSCCH: Physical Sidelink Control Channel
PSDCH: Physical Sidelink Discovery Channel
PSFICH: Physical Sidelink Feedback Indication Channel
ProSe: (Device to Device) Proximity Services

SLSS: Sidelink Synchronization Signal
PSSID: Physical Sidelink Synchronization Identity
$n^{SA}{}_{ID}$ : Sidelink group destination identity
$N^{SL}{}_{ID}$ : Physical sidelink synchronization identity
SA: Scheduling assignment
TB: Transport Block
TTI: Transmission Time Interval
RB: Resource Block

In the following description, although the term "new radio (NR) system" is used to distinguish a system according to various examples of the present disclosure from the existing system, the scope of the present disclosure is not limited thereto.

For example, a new radio (NR) system supports various subcarrier spacings (SCSs) by considering various scenarios, service requirements, potential system compatibility, and the like. Also, to overcome a poor channel environment, such as high pathloss, phasenoise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC). Here, the term "NR system" used herein is used as an example of a wireless communication system, and the term "NR system" itself is not limited to the aforementioned features.

Also, for example, 5-th generation (5G) mobile communication technology may be defined. Here, 5G mobile communication technology may be defined by including the existing Long Term Evolution-Advanced (LTE-A) system as well as the aforementioned NR system. That is, 5G mobile communication technology may operate by considering backward compatibility with a previous system as well as a newly defined NR system.

For example, a sidelink field of 5G may include all of sidelink technology in an LTE system and sidelink technology in an NR system. Here, the sidelink field may be essential to enhance a performance and to integrate new and various services through an ultra high reliability and an ultra low latency.

In the following, for clarity of description, an operation for vehicle-to-everything (V2X) communication and related information will be described based on the NR system. Here, the following features may not be limited to a specific system and may apply alike to other systems that are similarly configured. However, it is provided as an example only and the present disclosure is not limited thereto.

Meanwhile, V2X communication may be communication based on a vehicle. Here, the concept of a vehicle is evolving from a simple transportation device to a new platform. For example, information technology (IT) applies to a vehicle and various V2X services are provided accordingly. Services, such as, for example, prevention of traffic accidents, improvement of traffic environments, automatic driving, and remote driving, are provided. To this end, there is a growing need for developing and applying sidelink related technology.

In detail, with respect to existing communication technology, a communication from an Base Station (BS) to a user equipment (UE) may be a downlink and a communication from the UE to the BS may be an uplink. Here, communication between UEs may be required in addition to the communication between the BS and the UE. Here, the communication from one UE to another UE may be the aforementioned sidelink. For example, with respect to the aforementioned V2X communication, a vehicle-to-vehicle (V2V) communication or communication between a vehicle and another object (e.g., an object, excluding the BS, such as a pedestrian UE, a UE-type roadside unit (RSU), and the like) may be a sidelink. That is, in the case of performing vehicle-based communication, there are some constraints using only communication with the eNodeB alone. Therefore, the aforementioned sidelink technology may be developed and applied.

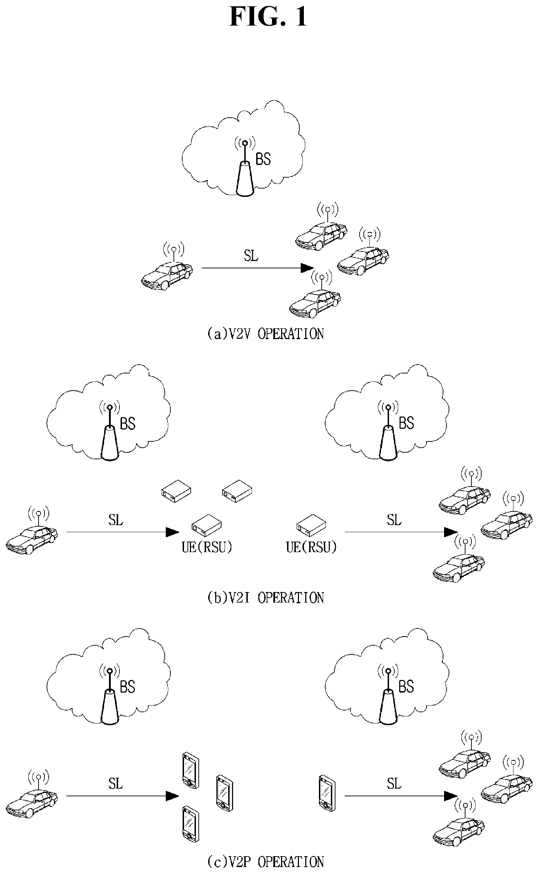

FIGS. 1 to 3 illustrate V2X scenarios which the present disclosure could be applied.

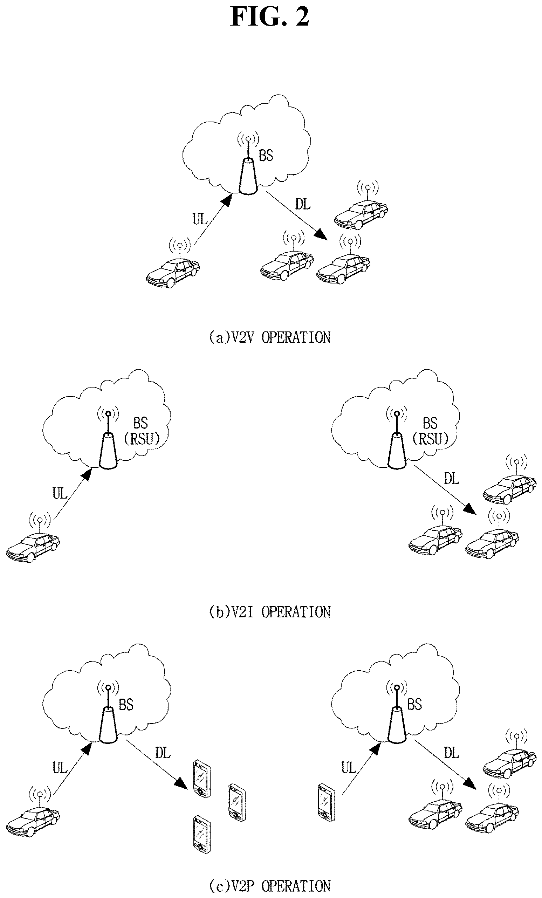

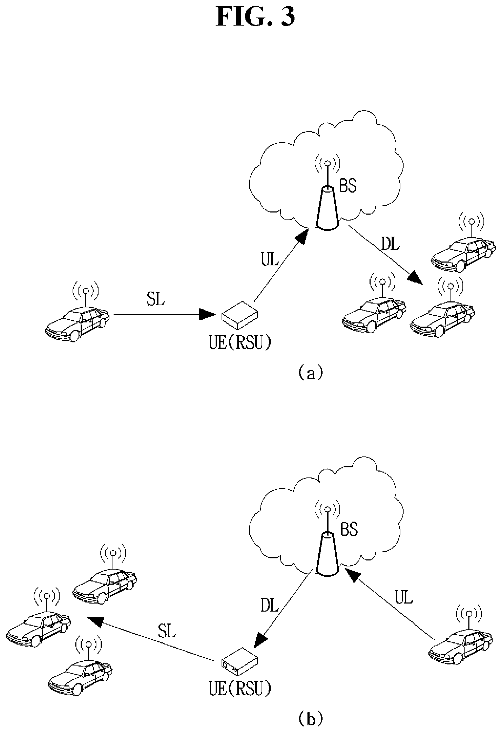

FIG. 1 may be a scenario of performing communication based on the aforementioned sidelink. FIG. 2 may be a scenario of performing a V2X operation using communication between a UE (or a vehicle) and a BS. FIG. 3 may be a scenario of performing communication using all of the aforementioned sidelink and communication with the BS.

For example, in the description related to V2X, the UE may be a vehicle. In the description related to V2X, the UE and the vehicle are collectively referred to as the UE. For example, the UE may refer to a device capable of performing communication with a sidelink and a BS, and may include a vehicle for V2X.

Also, in relation to V2X, D2D (Device to Device) may refer to communication between UEs. Also, the term "proximity-based service (ProSe)" may indicate a proximity service to a UE that performs D2D communication. Also, SL (sidelink) may be the aforementioned sidelink and sidelink control information (SCI) may indicate control information related to the aforementioned sidelink. Also, a Physical Sidelink Shared Channel (PSSCH) may be a channel used to transmit data through a sidelink and a Physical Sidelink Control Channel (PSCCH) may be a channel used to transmit control information through a sidelink. Also, a Physical Sidelink Broadcast Channel (PSBCH) may be a channel used to broadcast a signal through a sidelink and to forward system information. Also, a Physical Sidelink Feedback Indication Channel (PSFICH) may be a channel used for directing feedback information as a sidelink feedback channel. Also, a sidelink synchronization signal (SLSS) may be a synchronization signal for sidelink and physical sidelink synchronization identity (PSSID) may be ID information for sidelink synchronization. Also, $n_{ID}^{SA}$ (*Sidelink* group destination identity) may be ID information for distinguishing a sidelink group, and $N_{ID}^{SL}$ (Physical sidelink synchronization identity) may be ID information for sidelink synchronization. V2V may be referred to as vehicle-to-vehicle communication, V2P may be referred to as communication between vehicles and pedestrians, and V2I/N may be referred to as communication between vehicles and infrastructure/networks.

The terms SA, TB, TI, and RB may be the same terms used in the existing LTE. for example, in V2X communication, control information transmitted from a UE to another UE may be scheduling assignment (SA). If the aforementioned control information is used for sidelink communication, the control information may be SCI. Herein, the SCI may be transmitted through the PSCCH. Also, a portion of the SCI may be transmitted through the PSCCH and another portion may be transmitted through the PSSCH.

In V2X communication, data transmitted from a UE to another UE may be configured based on a unit of a transport port (TB). Here, the sidelink data may be transmitted through the PSSCH.

Next, herein, an operation mode may be defined based on a resource allocation method for transmitting data and control information for V2X communication or direct link (e.g., D2D, ProSe, or SL) communication.

For example, an eNodeB resource scheduling mode may be a mode in which an eNodeB or a relay node schedules resources used for a UE to transmit V2X (or direct link) control information and/or data. Through this, the UE may transmit the V2X (or direct link) control information and/or data. This mode may refer to the eNodeB resource scheduling mode.

For more detailed example, the eNodeB or the relay node may provide, to a sidelink (or direct link) transmitting UE, scheduling information about resources used to transmit sidelink (or direct ink) control information and/or data through downlink control information (DCI). Therefore, the sidelink (or direct link) transmitting UE may transmit the sidelink (or direct link) control information and data to a sidelink (or direct link) receiving UE, and the sidelink (or direct link) receiving UE may receive sidelink (or direct link) data based on the sidelink (or direct link) control information.

Also, a UE autonomous resource selection mode may be a resource allocation mode in which a UE autonomously selects resources used to transmit control information and data. The resource selection of the UE may be determined through sensing of the UE from a resource pool (i.e., a set of resource candidates). On the selected resource, the UE may transmit V2X (or direct link) control information and/or data.

For more detailed example, the sidelink (or direct link) transmitting UE may transmit sidelink (or direct link) control information and data to the sidelink (or direct link) receiving UE using its selected resource, and the sidelink (or direct link) receiving UE may receive sidelink (or direct link) data based on sidelink (or direct link) control information.

The aforementioned BS resource scheduling mode may be referred to as Mode 1 in sidelink (or direct link) communication for D2D and the like. Also, the BS resource scheduling mode may be referred to as Mode 3 in sidelink communication for V2X and the like. Also, the UE autonomous resource selection mode may be referred to as Mode 2 in sidelink (or direct link) communication for D2D and the like. Also, the UE autonomous resource selection mode may be referred to as Mode 4 in sidelink communication for V2X and the like. However, they are provided as examples only and the present disclosure is not limited thereto. That is, they may be regarded as the same mode with respect to the same target and the same operation.

For example, in NR V2X, BS resource scheduling mode may be referred to as mode 1 (Mode 1) and the UE autonomous resource selection mode may be referred to as mode 2 (Mode 2).

Although the following description is made based on V2X communication for clarity of description, it is not limited thereto. For example, the present disclosure may apply alike to communication based on a direct link such as D2D, ProSe, and the like.

Also, for example, V2X may be a general term for V2V, V2P, and V2I/N. Here, each of V2V, V2P, and V2I/N may be defined as the following Table 1, however, it is not limited thereto. That is, the following Table 1 is provided as an example only and not limited thereto.

[Table 1]

| V2V | - LTE or NR based communication between a vehicle and another vehicle |
|---|---|
| V2P | - LTE or NR based communication between a vehicle and a device carried by an individual (e.g., a terminal carried by a pedestrian, a cyclist, a driver, or a passenger) |
| V2I/N | - LTE or NR based communication between a vehicle and a roadside unit (RSU)/network |

(continued)

| | - The RSU refers to a suspended social infrastructure entity that supports V2X applications and may exchange messages with other independent entities that support V2X applications.<br>- The RSU is a logical independent entity integrated with a V2X application logic having functions of a BS (in this case, referable as a BS-type RSU) or a UE (in this case, referable as a UE-type RSU). |
|---|---|

Also, V2X communication may include PC5 based communication that is an interface for sidelink communication.

For example, the following Table 2 and FIG. 1 may refer to a scenario for supporting a V2X operation based on a PC5 interface (or SL). Here, (a) of FIG. 1 illustrates an example of a V2V operation, (b) of FIG. 1 illustrates an example of a V2I operation, and (c) of FIG. 1 illustrates an example of a V2P operation. That is, FIG. 1 illustrates a method of performing communication based on the sidelink (SL). Here, communication may be performed without a BS.

[Table 2]

| - Scenario that supports a V2X operation operating based on only PC5<br>- In this scenario, a UE transmits a V2X message to a plurality of UEs present in a local area through a sidelink.<br>- With respect to V2I, a transmitter UE or receiver UE(s) may be a UE-type roadside unit (RSU).<br>- With respect to V2P, a transmitter UE or receiver UE(s) may be a pedestrian UE. |
|---|

Meanwhile, the following Table 3 and FIG. 2 may refer to a scenario for supporting a V2X operation based on a Uu interface (i.e., an interface between a UE and a BS). Here, (a) of FIG. 2 illustrates an example of a V2V operation, (b) of FIG. 2 illustrates an example of a V2I operation, and (c) of FIG. 2 illustrates an example of a V2P operation. That is, the V2X operation may be supported using communication between a UE and a BS.

[Table 3]

| - Scenario that supports a V2X operation operating based on only Uu interface<br>- In this scenario, With respect to V2V and V2P, a UE transmits a V2X message to a BS through an uplink, and the BS transmits the V2X message to a plurality of UEs present in a local area through a downlink.<br>With respect to V2I, if a receiver is a BS-type RSU, a UE transmits a V2I message to a BS (BS-type RSU) through an uplink; and if a transmitter is a BS-type RSU, the BS (BS-type RSU) transmits the V2I message to a plurality of UEs present in a local area.<br>- With respect to V2P, a transmitter UE or receiver UE(s) may be a pedestrian UE.<br>- To support this scenario, the BS performs uplink reception and downlink transmission of a V2X message and uses a broadcast mechanism with respect to a downlink. |
|---|

The following Table 4 and FIG. 3 may refer to a scenario for supporting a V2X operation that uses all of a UE interface and PC5 interface (or SL). Here, (a) of FIG. 3 illustrates Scenario 3A of Table 4 and (b) of FIG. 3 illustrates Scenario 3B of Table 4.

In detail, referring to (a) of FIG. 3, a UE may transmit a V2X message to other UEs through a sidelink. One of the UEs receiving the V2X message may transmit the V2X message to a BS through an uplink (UL). The BS may receive the V2X message and may transmit a message based on the V2X message to other neighboring UEs through a downlink (DL). Here, for example, the downlink transmission may be performed using a broadcast method.

Referring to (b) of FIG. 3, a UE may transmit a V2X message to a BS through an uplink (UL) and the BS may transmit the V2X message to at least one UE or RSU. In response thereto, the UE or the RSU may transmit the received message to a plurality of neighboring UEs through a sidelink (SL).

In (a) and (b) of FIG. 3, the V2X operation may be supported using all of communication between the BS and the UE and the sidelink.

[Table 4]

| - Scenario in which a UE transmits a V2X message to other UEs through a sidelink<br>- Scenario 3A(Scenario 3A) |
|---|

(continued)

In this scenario, a UE transmits a V2X message to other UEs through a sidelink. One of a plurality of receiver UEs is a UE-type RSU and receives the V2X message through the sidelink and transmits the V2X message to a BS through an uplink. The BS receives the V2X message from the UE-type RSU and transmits the V2X message to a plurality of UEs present in a local area through a downlink.

To support this scenario, the BS performs uplink reception and downlink transmission of the V2X message, and uses a broadcast mechanism with respect to the downlink

- Scenario 3B(Scenario 3B)

In this scenario, a UE transmits a V2X message to a BS through an uplink. The BS transmits the V2X message to at least one UE-type RSU. The UE-type RSU transmits the V2X message to other UEs through a sidelink.

To support this scenario, the BS performs uplink reception and downlink transmission of the V2X message, and uses a broadcast mechanism with respect to the downlink.

As described above, the V2X communication may be performed through the BS and may be performed through direct communication between UEs. Here, if the BS is used, transmission and reception may be performed through a Uu link that is a communication interface between an LTE BS and UE in LTE-based V2X communication. Also, if the sidelink is used for the direct communication between UEs, transmission and reception may be performed through a PC5 link that is a communication interface between LTE UEs in the LTE-based V2X communication.

For example, even in an NR system, the V2X communication may be performed using communication between a UE and a BS and a sidelink between UEs. Here, there may be a difference between a communication (uplink/downlink) method between the BS and the UE in the NR system. For example, the communication methods may be similar in terms of some features and there may be some changes based on the NR system that is a new system. Also, for example, there may be a difference between the sidelink in the NR system and the sidelink in the existing system. That is, there may be some changes in the sidelink based on the NR system that is a new system by considering the aforementioned communication difference between the BS and the UE.

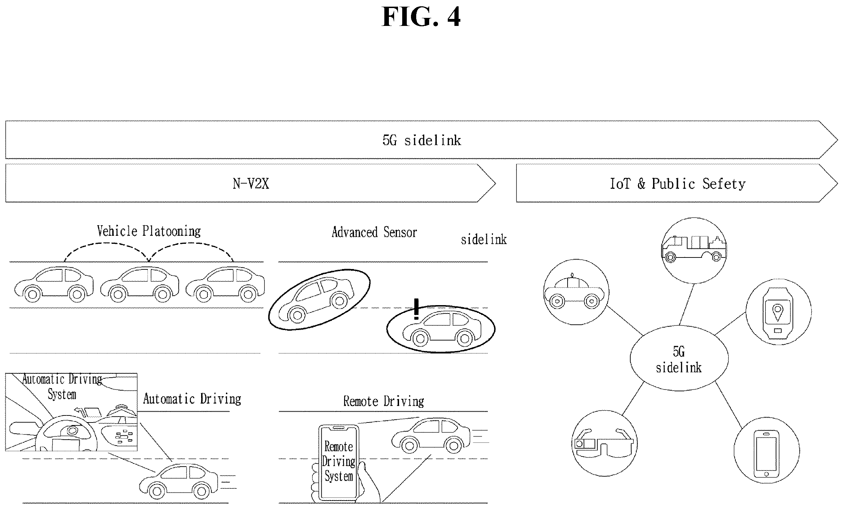

FIG. 4 illustrates an example of a service provided based on a sidelink to which the present disclosure may apply.

Referring to FIG. 4, a V2X related service or an Internet of Things (IoT) service may be provided based on a 5G sidelink. Here, for example, the 5G sidelink may be a concept that includes all of a sidelink based on an existing LTE system and a sidelink based on an NR system. That is, the 5G sidelink may be a service that is provided by considering the sidelink applied in each system.

For example, referring to FIG. 4, with respect to aV2X service, a vehicle platooning, an automatic driving, an advanced sensor, and a remote driving service may be provided. Here, the vehicle platooning may refer to technology that allows a plurality of vehicles to dynamically form a group and operate in a similar manner. Also, the automatic driving may refer to technology that drives a vehicle based on a complete automation and a semiautomation. Also, the advanced sensor may refer to technology that collects and exchanges data acquired from a sensor or a video image. Also, the remote driving may refer to technology for remotely controlling a vehicle and technology for an application. That is, the aforementioned services may be provided as a V2X-based service. Here, the services are provided as examples only and the present disclosure is not limited thereto. Here, requirements, such as ultra latency, ultra connectivity, low power, and high reliability, may be required to provide the V2X service. Therefore, the 5G sidelink may require an operation method for meeting the services and the requirements according thereto. A detailed method considering the requirements is described below.

Hereinafter, the physical resource structure of the NR system is described.

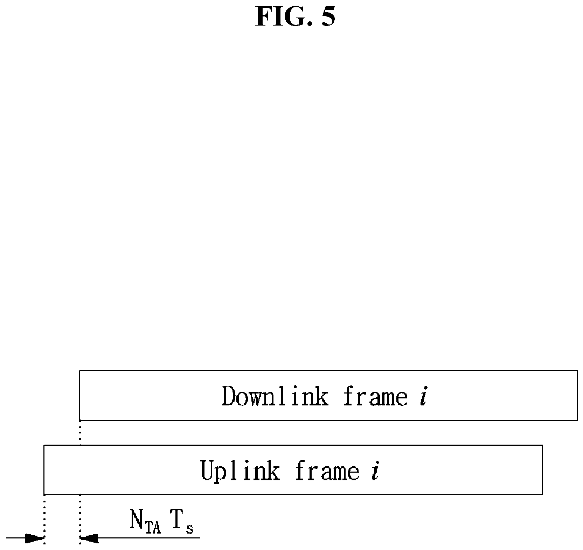

FIG. 5 illustrates examples of a frame structure for the NR system to which the present disclosure may be applied.

In NR, a basic unit of a time domain may be $T_c = 1(\Delta f_{max} \cdot N_f)$. Here, $\Delta f_{max} = 480 \cdot 10^3$ and $N_f = 4096$ . In LTE, $T_s = 1/(\Delta f_{ref} \cdot N_{f,ref})$, $\Delta f_{ref} = 15 \cdot 10^3 Hz$, and $N_{f,ref} = 2048$ may be defined as a reference time unit. The constant for the multiples relationship between the NR reference time unit and the LTE reference time unit may be defined as $\kappa = T_s/T_c = 64$.

Referring to FIG. 5, a time structure of a frame for a downlink/uplink (DL/UL) transmission may include $T_f = (\Delta f_{mas} N_f/100) \cdot T_s = 10 ms$. Here, a single frame may include 10 subframes corresponding to $T_{sf} = (\Delta f_{mas} N_f/1000) \cdot T_s = 1 ms$. A number of consecutive OFDM symbols per subframe may be

$$N_{symb}^{subframe,\mu} = N_{symb}^{slot} N_{slot}^{subframe,\mu}.$$

Also, each frame may be divided in two half frames and the half frames may include 0~4 subframes and 5~9 subframes. Here, half frame 1 may include 0~4 subframes and half frame 2 may include 5~9 subframes.

Referring to FIG. 5, $N_{TA}$ shows a timing advance (TA) between the downlik (DL) and the uplink (UL). Here, a transmission timing of uplink transmission frame i is determined based on a downlink reception time at a UE according to the following Equation 1.

[Equation 1]

$$T_{TA} = (N_{TA} + N_{TA,offset}) \cdot T_C$$

In Equation 1, $N_{TA,offset}$ denotes a TA offset occurring due to a duplex mode difference and the like. Basically, in a frequency division duplex (FDD), $N_{TA,offset}$ = 0. In a time division duplex (TDD), $N_{TA,offset}$ may be defined as a fixed value by considering a margin for a DL-UL switching time.

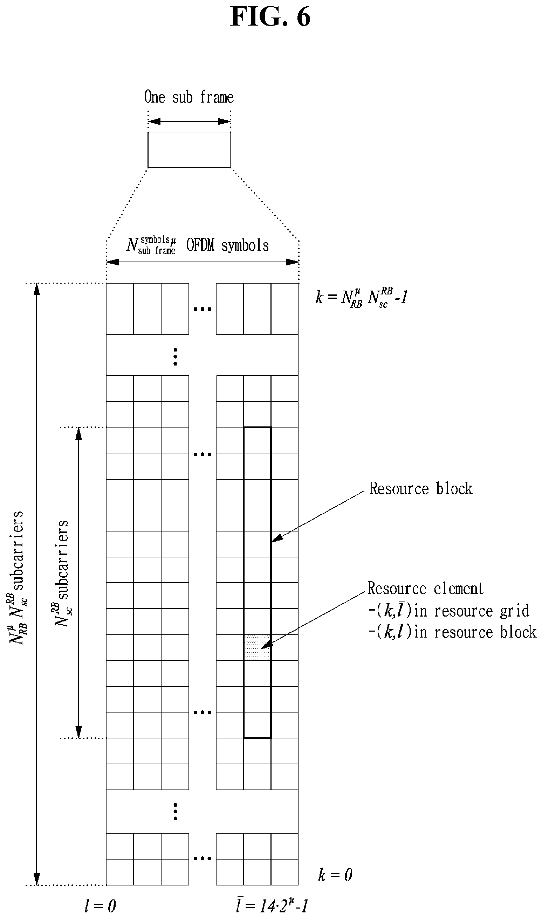

FIG. 6 illustrates an NR resource structure to which the present disclosure may apply.

A resource element within a resource grid may be indexed based on each subcarrier spacing. Here, a single resource grid may be generated for each antenna port and for subcarrier spacing. Uplink/downlink transmission and reception may be performed based on a corresponding resource grid.

A single resource block is configured on a frequency domain using 12 resource elements and configures an index n_PRB for a single resource block every 12 resource elements. An index of the resource block may be used in a specific frequency band or system bandwidth. The index for the resource block may be defined as shown in Equation 2. Herein, $N^{RB}_{sc}$ indicates the number of subcarriers per resource block and k indicates the subcarrier index.

[Equation 2]

$$n_{PRB} = \left\lfloor \frac{k}{N^{RB}_{sc}} \right\rfloor$$

Numerologies may be variously configured to meet various services and requirements of the NR system. For example, a plurality of subcarrier spacings (SCSs) may be supported, which differs from the existing LTE/LTE-A system that supports a single SCS.

A new numerology for the NR system that includes supporting the plurality of SCSs may operate in the frequency range or carrier, such as 3 GHz or less, 3 GHz~6 GHz, or 6 GHz~52.6 GHz, to solve an issue that a wide bandwidth is unavailable in the existing frequency range or carrier, such as 700 MHz or 2GHz. However, the scope of the present disclosure is not limited thereto.

Table 5 below shows an example of the numerology supported by the NR system.

[Table 5]

| u | Δf=$2^{u} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the Table 5, the numerologies may be defined based on an SCS, a cyclic prefix (CP) length, and a number of OFDM symbols per slot, which are used in an OFDM system. The aforementioned values may be provided to a UE through upper layer parameters, DL-BWP-mu and DL-BWP-cp (DL) and UL-BWP-mu and UL-BWP-cp (UL).

For example, referring to the following Table 5, if μ=2 and SCS = 60 kHz, a normal CP and an extended CP may be applied. In other numerology index, only the normal CP may be applied.

A normal slot may be defined as a basic time unit used to transmit a single piece of data and control information in the NR system. A length of the normal slot may basically include 14 OFDM symbols. Also, unlike a slot, a subframe may have an absolute time length corresponding to 1 ms in the NR system and may be used as a reference time for a length of another time section. Here, for coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having a number of symbols less, by at least one symbol, than that of the normal slot. For example, in the case of providing a low latency such as a Ultra-Reliable and Low Latency Communications (URLLC) service, a latency may decrease through the non-slot having the number of slots less than that of the normal slot. Here, the number of OFDM symbols included in the non-slot may be determined based on a frequency range. For example, a non-slot with 1 OFDM symbol length may be considered in the frequency range of 6 GHz or more. As another example, a number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7 as a non-slot standard, it is provided as an example only.

Also, for example, an SCS corresponding to μ=1 and 2 may be used in the unlicensed band of 6 GHz or less and an SCS corresponding to μ=3 and 4 may be used in the unlicensed band above 6 GHz.

[Table 6]

| u | N$^{slot}_{symb}$ | N$^{frame,u}_{slot}$ | N$^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 6 shows, in the case of normal CP, a number of OFDM symbols per slot ( $N^{symb,\mu}_{slot}$ ), a number of slots per frame ( $N^{frame,\mu}_{slot}$ ), and a number of slots per subframe ( $N^{subframe,\mu}_{slot}$ ) for each SCS setting parmeter μ, as provided by Table 6. Here, in Table 6, the values are based on the normal slot having 14 OFDM symbols.

[Table 7]

| u | N$^{slot}_{symb}$ | N$^{frame,u}_{slot}$ | N$^{subframe,u}_{slot}$ |
|---|---|---|---|
| 2 | 12 | 40 | 4 |

Table 7 shows, in the case the extended CP may be applied ( $\mu = 2$ and SCS = 60 kHz), a number of slots per frame and a number of slots per subframe based on the normal slot of which the number of OFDM symbols per slot ( $N^{symb,\mu}_{slot}$ ) is 12.

Also, as described above, a single subframe may correspond to 1 ms on a time axis. Also, a single slot may correspond to 14 symbols on the time axis. Also, for example, a single slot may correspond to 7 symbols on the time axis. Therefore, a number of slots and a number of symbols available in 10ms corresponding to a single radio frame may be differently set. Table 8 shows a number of slots and a number of symbols according to each SCS. Here, for example, an SCS of 480 kHz may not be considered and the present disclosure is not limited thereto.

[Table 8]

| SCS | Number of Slots within 10ms (14 symbols per slot) | Number of Slots within 10ms (7 symbols per slot) | Number of symbols within 10ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

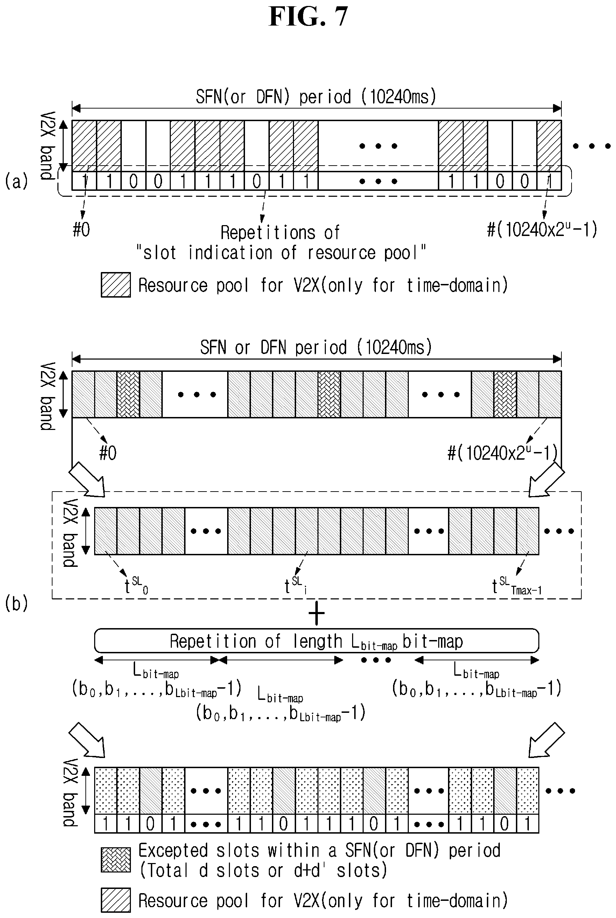

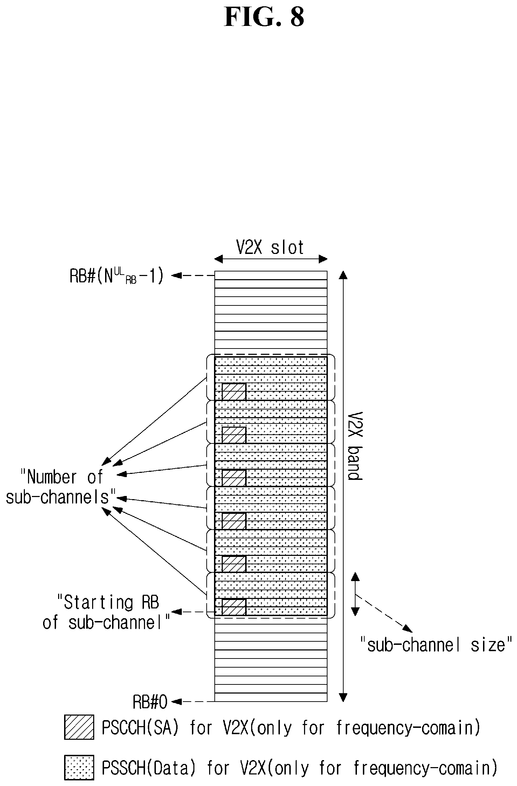

FIGS. 7 and 8 illustrate examples of V2X resource pool configuration to which the present disclosure may apply.

Referring to FIGS. 7 and 8, a method of configuring a resource pool for a control channel (PSCCH) through which scheduling assignment (SA) is transmitted and a data channel (PSSCH) through which data related thereto is transmitted in V2X is described. Here, the resource pool may refer to a set of resource candidates available for transmission of SA and/or data. Each resource pool may be called a slot pool in a time domain and may also be called a resource block pool in a frequency domain. Here, the resource pool as in the examples of FIGS. 7 and 8 may be one for vehicle (V)-UE in V2X. Also, the resource pool configuration method as in the examples of FIGS. 7 and 8 are provided as an example only and the resource pool may be configured using another method.

The resource pool as in the examples of FIGS. 7 and 8 may be defined in a UE autonomous resource selection mode (or mode 2).

In a BS resource scheduling mode (or mode 1), all of sidelink slots (e.g., corresponding to all of uplink slots in NR) in the time domain and resources corresponding to all of resource blocks (RBs) within V2X carrier or band in the frequency domain may be a set of resource candidates available for transmitting SA and/or data. Also, even in the BS resource scheduling mode (or mode 1), a set of resource candidates available for transmitting SA and/or data may be configured by separately defining the resource pool as in the UE autonomous resource selection mode (or mode 2).

That is, the resource pool according to the present disclosure described with reference to FIGS. 7 and 8 may be defined in the UE autonomous resource selection mode (or mode 2) and/or the eNodeB resource scheduling mode (or mode 1).

Hereinafter, the slot pool corresponding to the resource pool in the time domain will be further described.

FIG. 7 illustrates slots in which the resource pool is configured in the time domain, with respect to the resource pool. Referring to FIG. 7, slots for the resource pool for V2X may be defined by indicating a repetition of a bitmap with respect to all of the slots excepting specific slots. The slots for the resource pool for V2X may be slots in which transmission and/or reception of SA and/or data is allowed for the resource pool in V2X.

Here, slots to be excepted from bitmap repetitions may include slots used for transmission of a Sidelink Signal Block (SSB) including a Primary Sidelink Synchronization Signal (PSSS), a Secondary Sidelink Synchronization Signal (SSSS), and a Physical Sidelink Broadcast Channel (PSBCH). Also, the excepted slots may further include downlink (DL) slots or flexible slots, not uplink (UL) slots available as sidelink (SL) slots in TTD. Here, the excepted slots are not limited to the aforementioned example.

For example, excepted slots within a system frame number (SNF) or a D2D frame number (DFN) period may include d non-uplink slots and slots for SSB. Also, the excepted slots may further include d' slots that are additionally excepted such that a bitmap with a length of L bitmap may be repeatedly applied by an integer multiple within the SFN or DFN period. Here, the excepted slots are not limited to the aforementioned example.

Also, the repeatedly applied bitmap may be indicated with upper layer signaling (signaling field "slot indication of resource pool" in FIG. 7) such as RRC and the like. A length of the signaling field may be 16, 20, or 100, but is not limited thereto. If the bitmap value is 1, it may indicate a slot for the resource pool. If the bitmap value is 0, it may indicate a slot that does not belong to the resource pool. Here, a value of u of FIG. 7 may follow a value defined in Table 5 to Table 7 as a value according to a Subcarrier Spacing (SCS).

Next, the resource blook pool corresponding to the resource pool in the frequency domain will be further described.

FIG. 8 illustrates slots in which the resource pool is configured in the frequency domain. Referring to FIG. 8, a PSCCH that transmits SA and a PSSCH that transmits data within the resource pool may be simultaneously transmitted in a single sub-channel. Here, the PSSCH may be transmitted over the entire sub-channel, whereas the PSCCH may be transmitted in a portion of the sub-channel.

Referring to FIG. 8, in a slot in which the resource pool is configured in the time domain for V2X "Starting RB of sub-channels" may be defined based on a single RB unit with respect to all of RBs (RB#0 to RB# ( $N_{RB}^{UL} - 1$ )) in the frequency domain (here, $N_{RB}^{UL}$ denotes a total number of RBs corresponding to a system bandwidth for uplink (UL) and V2X for a sidelink is defined in a UL band and thus, UL may be replaced with SL (i.e., $N_{RB}^{SL}$ may be applied instead of $N_{RB}^{UL}$). The signaling field "Starting RB of sub-channels" may be indicated through upper layer signaling, such as RRC and the like. Consecutive RBs corresponding to a total number of K sub-channels starting from RB indicated with such "Starting RB of sub-channels" belong to the resource pool. Here, a number of RBs that constitute a single sub-channel may be indicated with a signaling field "Sub-channel size" and the number of K sub-channels may be indicated with a signaling field "Number of sub-channels" through upper layer signaling such as RRC.

For example, "Sub-channel size" $N_{subchannel}$ may be 10, 15, 20, 25, 50, 75, or 100 RBs, but without being limited thereto, 4, 5, or 6 RBs may be used. Also, referring to FIG. 8, the PSCCH for SA allocated to a portion of the sub-channel may be allocated to X RBs within the sub-channel. Here, $X \leq N_{subchannel}$.

Positioning technology applied below is being further improved using long term evolution (LTE)-based NR wireless technology and, in the case of being applied for commercial purpose, includes technologies for satisfying an error of up to 3 m indoors and an error of up to 10 m outdoors for 80% of users within coverage. To this end, for uplink and/or downlink, the following various technologies are being considered, including arrival time-based technology and departure/arrival angle-based technology.

As a downlink-based method, time-based technology includes a DL-time difference of arrival (TDOA) method and angle-based technology includes a DL-angle of departure (DL-AoD) method. For example, when estimating a location of a UE based on DL-TDOA, a time difference of arrival between signals transmitted from different transmission points may be calculated and the location of the UE may be estimated through a time difference of arrival value and location information of each transmission point. Also, for example, when estimating a location of a UE based on DL-AoD, the location of the UE may be estimated by verifying an angle of departure of a signal transmitted to the UE and by verifying a direction in which the signal is transmitted based on a location of a corresponding transmission point.

Also, as an uplink-based method, time-based technology includes a UL-TDOA method and angle-based technology includes a DL-angle of arrival (AOA) method. For example, when estimating a location of a UE based on UL-TDOA, a time difference for a signal transmitted from the UE to arrive at each transmission point may be calculated and the location of the UE may be estimated through a time difference of arrival value and location information of each transmission point. Also, for example, when estimating a location of a UE based on DL-AoA, the location of the UE may be estimated by verifying an angle of arrival of a signal transmitted from the UE and by verifying a direction in which the signal is transmitted based on a location of a corresponding transmission point.

Also, a downlink and uplink-based method includes a multi-cell Round-Trip Time (RTT) method, an RTT method between one or more adjacent gNodeBs and/or Transmission Reception Points (TRPs) for NR uplink and downlink positioning, and an Enhanced Cell ID (E-CID) method. For example, when estimating a location of a UE based on multi-cell RTT, a time used to transmit a signal and to receive a response in a plurality of cells (i.e., RTT) may be measured and the location of the UE may be estimated through location information of the plurality of cells. Also, the location of the UE may be estimated by verifying an RTT signal in gNodeBs and/or TRPs. Also, when estimating a location of a UE based on E-CID, the location of the UE may be estimated through cell location information by measuring an angle of arrival and reception strength and by verifying each cell ID.

To realize the aforementioned technologies, an LTE downlink-based positioning reference signal (PRS) is being newly discussed as a "DL PRS" modified according to an NR downlink structure. Additionally, for uplink, it is being evolved into an "SRS for positioning" that is a reference signal improved by considering a sounding reference signal (SRS), which is an NR-based uplink reference signal considering MIMO, up to positioning.

Also, to provide an improved solution in association with a positioning operation, additional requirements are being considered with respect to high accuracy, low latency, network efficiency (e.g., scalability, RS overhead, etc.), and UE efficiency (e.g., power consumption, complexity, etc.) for horizontal and vertical positioning.

For example, requirements may be considered such that a positioning operation may have high accuracy considering an industrial Internet of things IoT (IIoT) scenario. To this end, a DL/UL location reference signal, signaling/procedure for accuracy improvement, reduced latency, and a method of improving network efficiency and UE efficiency may be considered.

Therefore, a work of improving performance of NR-based positioning technologies for higher accuracy and lower latency and network/UE efficiency is being applied in commercial use cases, such as IoT devices for smart home or wearable, and IIoT use cases, such as IoT devices in smart factory.

In this regard, the work aims to increase accuracy with an error of up to 1 m for commercial use cases and to increase accuracy with an error of up to 0.2 m for IIoT use cases, and to further reduce a delay time from within the existing 100 ms to within 10 ms.

Here, the IIoT scenario considering devices for smart factory indoors (indoor factory devices) may be as shown in Table 9 below. Also, for example, Table 10 below shows configuration for simulation considering the IioT scenario. Specifically, in Table 10, a hall size, a base station (BS) location, and a room height may be set in consideration of the IIoT scenario, such as smart factory. Based thereon, a transmission and reception operation of a base station may be verified. However, it is provided as an example only and the present disclosure may not be limited to the aforementioned configuration.

In detail, the IIoT scenario may consider a dense clutter case (dense) and a sparse clutter case in an internal environment. That is, it may be distinguished depending on how many clutters are present in the internal environment. Also, as the IIoT scenario, a case in which an antenna height is higher than the average clutter height and a case in which the antenna height is lower than the average clutter height may be considered. That is, the IIoT scenario may be as shown in Table 9 below, considering the aforementioned cases.

That is, InF-SL represents a scenario considering a case with sparse clutter and in which both transmitting and receiving antennas of a base station have a lower height than the average clutter antenna height in an indoor factory environment, such as a smart factory. Also, InF-DL represents a scenario considering a case with dense clutter and in which both transmitting and receiving antennas of the base station have a lower height than the average clutter antenna height in the indoor factory environment, such as a smart factory.

Meanwhile, InF-SH represents a scenario considering a case with sparse clutter and in which transmitting or receiving antenna of the base station has a higher height than the average clutter antenna height in the indoor factory environment, such as a smart factory. Also, InF-DH represents a scenario considering a case with dense clutter and in which transmitting or receiving antenna of the base station has a higher height than the average clutter antenna height in the indoor factory environment, such as a smart factory.

Additionally, InF-HH represents a scenario considering a case in which both transmitting and receiving antennas of the base station have a higher height than the average clutter antenna height regardless of clutter density, in the indoor factory environment, such as a smart factory.

Here, a clutter refers to a form in which base stations are intensively arranged at regular intervals in a certain space. For example, the clutter may be implemented with 18 base stations as shown in Table 10 in an internal environment, but it is provided as an example only and the present disclosure is not limited thereto.

Also, as described above, considering the clutter density and the antenna height between a base station and a clutter in the scenario is because, as characteristic or interference of radio waves varies accordingly, positioning technology for satisfying various performance requirements (accuracy, latency, network/UE efficiency, etc.) required for positioning may slightly vary.

However, in actual application, common positioning technology capable of covering all requirements in the above five scenarios may be applied. Positioning technology to be described herein below may be applicable to all of the five scenarios. That is, positioning may be performed by applying the following positioning technology to be described herein to all IIoT devices that operate based on NR in an indoor factory environment, such as a smart factory.

[Table 9]

| |
|---|
| - InF-SL : Indoor Factory with Sparse clutter and Low base station height (both Tx and Rx are below the average height of the clutter)<br>- InF-DL : Indoor Factory with Dense clutter and Low base station height (both Tx and Rx are below the average height of the clutter)<br>- InF-SH : Indoor Factory with Sparse clutter and High base station height (Tx or Rx elevated above the clutter)<br>- InF-DH : Indoor Factory with Dense clutter and High base station height (Tx or Rx elevated above the clutter)<br>- InF-HH : Indoor Factory with High Tx and High Rx (both elevated above the clutter) |

[Table 10]

| | | |
|---|---|---|
| Layout | Hall size | InF-SH:<br>    (baseline) 300x150 m<br>    (optional) 120x60 m<br>InF-DH:<br>    (baseline) 120x60 m<br>    (optional) 300x150 m |
| | BS locations | 18 BSs on a square lattice with spacing D, located D/2 from the walls.<br>    - for the small hall (L=120m x W=60m): D=20m<br>    - for the big hall (L=300m x W=150m): D=50m<br> |
| | Room height | 10m |

In the following, a method of generating a positioning reference signal (PRS) in consideration of positioning requirements required by considering the aforementioned IIoT scenario and a new application is described.

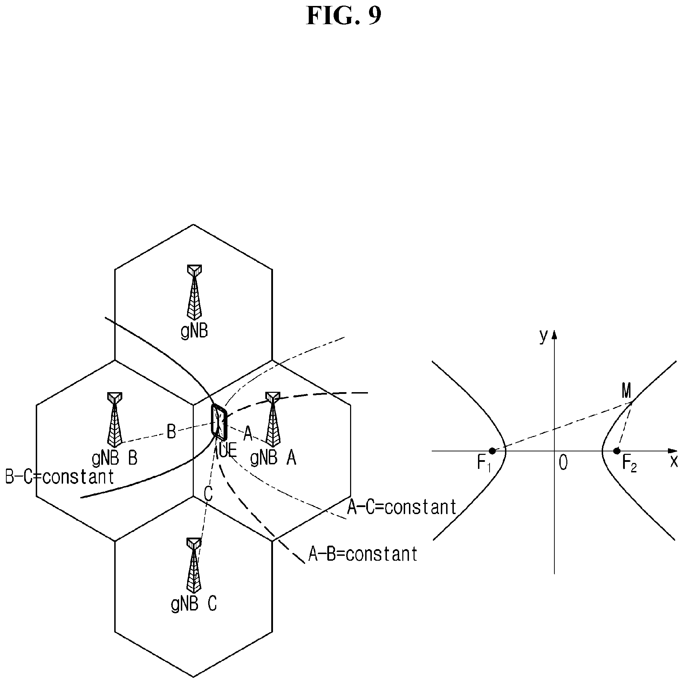

FIG. 9 illustrates a method of performing positioning based on an observed time difference of arrival (OTDOA) to which the present disclosure may apply.

OTDOA may be a method of measuring a location by tracking a signal transmitted to a ground station through a communication satellite in an LTE and/or NR system. That is, OTDOA is based on measuring a time difference of arrival between wireless signals transmitted at various locations. For example, a plurality of cells may transmit a reference signal (RS) and a UE may receive the reference signal. Since a distance between each of the plurality of cells and a location of the UE is different, a time of arrival at which a reference signal transmitted from each of the plurality of cells is received at the UE may be different. Here, the UE may calculate a time difference for a signal received from each cell and may transmit calculated information to a network. The network may combine the time difference with antenna location information of each cell to calculate the location of the UE. Here, at least three cells may be used to measure the location of the UE.

Also, for example, a difference in point in time at which the UE receives a reference signal from each of a pair of base stations (gNodeBs/eNodeBs) is defined as a reference signal time difference (hereinafter, RSTD). Here, location measurement by the RSTD may be performed based on a downlink signal. The UE may estimate a location based on TDOA measurement of special reference signals received from other base stations (gNodeBs/eNodeBs).

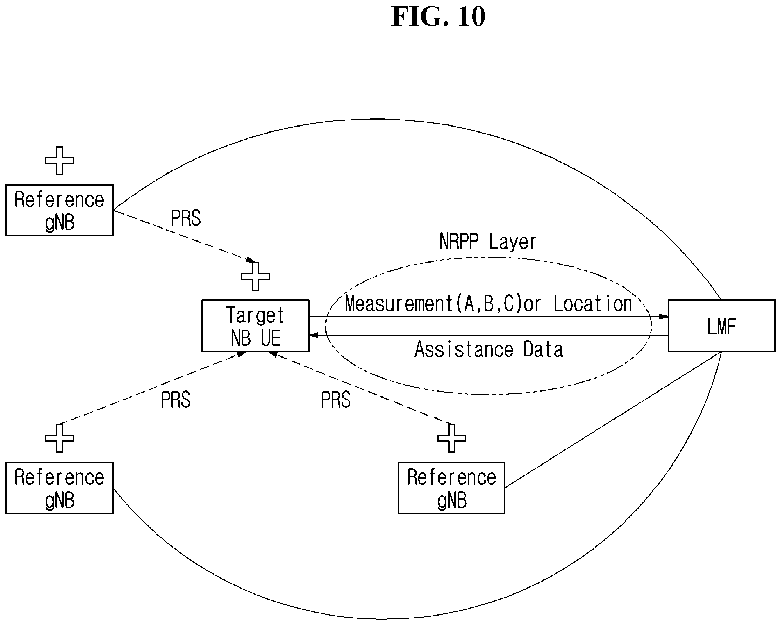

FIG. 10 illustrates a control plane and user plane configuration diagram for NR positioning protocol (NRPP) to which the present disclosure may apply. For example, positioning technology may be defined as at least one of enhanced cell ID (E-CID), observed time difference of arrival (OTDOA) and A-global navigation satellite system (GNSS). Here, the aforementioned positioning technology may simultaneously support positioning solutions of control plane and user plane. LTE and/or NR network-based positioning function may be supervised by a location management function (LMF). Here, control plane positioning and user plane positioning may be performed through the LMF. Here, the LMF may be controlled at a network level and may interwork with a base station through a mobility entity (e.g., access and mobility management function (AMF)).

As another example, the LTE and/or NR network-based positioning function may be controlled under supervision of Evolved-Serving Mobile Location Centre (E-SMLC)/Secure User Plane Location (SUPL) Location Platform (SLP) based on an LTE positioning protocol (LPP). Here, positioning may be performed on the control plane through the E-SMLC and positioning may be performed on the user plane through the SLP and each may be controlled at a network level and may interwork with the base station through a mobility entity (e.g., mobility management entity (MME)).

For example, in the LTE system, positioning may be performed through location estimation based on downlink or positioning may be performed through location estimation based on a cell ID, based on a time difference. In the NR system, positioning may be performed by considering DL-based location estimation (e.g., PRS) and UL-based location estimation (e.g., SRS for positioning). Also, the positioning may be performed through a positioning operation based on a signal exchange time for a plurality of cells as a round trip time (RTT) or through a positioning operation based on a cell ID. Also, the positioning may be performed through a positioning operation based on a time difference between received signals. Also, since a new communication system performs communication based on beams, a positioning operation may be performed based on an angle difference for each beam. Downlink/uplink reference signals and UE/base station operations as described above may be as shown in Table 11 and Table 12 below.

[Table 11]

| DL/UL Reference Signals | UE Measurements | To facilitate support of the following positioning techniques |
|---|---|---|
| Release-16 DL PRS | DL RSTD | DL-TDOA |
| Release-16 DL PRS | DL PRS RSRP | DL-TDOA, DL-AoD, Multi-RTT |
| Release-16 DL PRS / Release-16 SRS for positioning | UE Rx-Tx time difference | Multi-RTT |
| Release-15 SSB / CSI-RS for RRM | SS-RSRP(RSRP for RRM), SS-RSRQ(for RRM), CSI-RSRP (for RRM), CSI-RSRQ(for RRM), SS-RSRPB(for RRM) | E-CID |

[Table 12]

| DL/UL Reference Signals | gNB Measurements | To facilitate support of the following positioning techniques |
|---|---|---|
| Release-16 SRS for positioning | UL RTOA | UL-TDOA |
| Release-16 SRS for positioning | UL SRS-RSRP | UL-TDOA, UL-AoA, Multi-RTT |
| Release-16 SRS for positioning, Release-16 DL PRS | gNB Rx-Tx time difference | Multi-RTT |
| Release-16 SRS for positioning, | AoA and ZoA | UL-AoA, Multi-RTT |

Here, the terms in Table 11 and Table 12 may be as follows.

RSTD (Reference Signal Time Difference)
RSRP (Reference Signal Received Power)
RTOA (Relative Time Of Arrival)
RSRQ (Reference Signal Received Quality)
RSRPB (Reference Signal Received Power per Branch)
RRM (Radio Resource Management)
CSI-RS (Channel State Information Reference Signal)

Here, the RSTD may represent a difference in transmission time between reference signals and the RTOA may represent a relative time value at which a signal arrived. Positioning may be performed based on location information of a transmission point by calculating a relative time difference value based on a location of a transmission point at which a reference signal is transmitted and a transmission time difference. Also, the RSRP represents power of a received reference signal and the RSRPB represents strength of a reference signal measured at each branch. The RSRQ represents quality of a received reference signal. Whether a positioning operation is possible may be verified by verifying the power and the quality of the received reference signal through the RSRP and the RSRQ. Also, the RRM represents performing resource management and verifies resources for positioning.

Also, for example, an SRS for positioning may be configured to an uplink reference signal for positioning. However, it is only a name for clarity of description and is not limited to the aforementioned embodiment. Also, it may be changed to a different name and applied to a newly proposed communication system and may also be applied in a form that changes according to the new communication system.

In detail, for example, in an NR system, an SRS for positioning operation may be generated. Here, the number of SRS symbols may be 1, 2, or 4 for "SRS for Multi Input Multi Output (MIMO)." Here, in the case of an SRS for positioning, more SRSs may be required. Therefore, the number of SRS symbols may be 1, 2, 4, 8, or 12. Also, up to an $N^{th}$ symbol (N=0,1...13) from the very end of the slot may be used as a location of an SRS symbol. That is, the SRS symbol may be assigned based on the very end of the slot. Also, for example, the number of SRS combs may be 2, 4, or 8, which is described below. Also, for example, offset may be applied to SRS mapping, which may be as shown in Table 13 below.

[Table 13]

| $K_{TC}$ | $k_{\text{offset}}^0, ..., k_{\text{offset}}^{N_{\text{symb}}^{\text{SRS}}-1}$ | | | | |
|---|---|---|---|---|---|
| | $N_{\text{symb}}^{\text{SRS}} = 1$ | $N_{\text{symb}}^{\text{SRS}} = 2$ | $N_{\text{symb}}^{\text{SRS}} = 4$ | $N_{\text{symb}}^{\text{SRS}} = 8$ | $N_{\text{symb}}^{\text{SRS}} = 12$ |
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

SRS sequence may be Zadoff-chu-based sequence. For example, the SRS sequence may be generated based on Equation 3 below. Here, n denotes a subcarrier index and $l'$ denotes a symbol. Here, $0 \leq n \leq M_{sc,b}^{SRS} - 1$ , and $l' \in \left\{0, 1, \ldots, N_{symb}^{SRS} - 1\right\}$ . pi denotes an antenna port. For example, since the SRS for positioning uses only a single antenna port, the above pi value may be 1. $\alpha_i$ denotes a cyclic shift (CS) value, and $\alpha_i$ may be as shown in Equation 4 and Equation 5 below, and, based thereon, the SRS sequence may be generated. Here, in Equation 5, $n_{SRS}^{cs} \in \left\{0, 1, \ldots, n_{SRS}^{cs,max} - 1\right\}$ . Here, the SRS sequence may maintain orthogonality by shifting phase based on Equation 4 and Equation 5 below.

[Equation 3]

$$r^{(p_i)}(n, l') = r_{u,v}^{(\alpha_i, \delta)}(n),$$

[Equation 4]

$$\alpha_i = 2\pi \frac{n_{SRS}^{cs,i}}{n_{SRS}^{cs,max}}$$

[Equation 5]

$$n_{SRS}^{cs,i} = \left( n_{SRS}^{cs} + \frac{n_{SRS}^{cs,max} \left( p_i - 1000 \right)}{N_{ap}^{SRS}} \right) \bmod n_{SRS}^{cs,max}$$

According to the present disclosure, the number of SRS combs may be variously set to 2, 4, or 8. For example, in the case of following the LTE system, 4 may be applied as the number of combs and, based thereon, 12 CSs may be used. For the number of combs according to the present disclosure, a different number may be applied and set according to a system applied.

In the case of considering an SRS for positioning in a new communication system according to the present disclosure, if the comb size is 2, the maximum number of CSs may be 8. Also, if the comb size is 4, the maximum number of CSs may be 12. Also, since an SRS may be used for positioning, comb size = 8 may also be considered.

For example, the SRS for positioning may support only a single antenna port. The SRS for positioning does not support frequency hopping and frequency axis assignment may support 4 PRBs to 272 PRBs in units of 4 PRBs. Also, in the case of the SRS for positioning, an aperiodic feature may be supported in the same manner as an aperiodic SRS. Information on the antenna port, frequency hopping, frequency assignment, and periodicity may be indicated through higher layer signaling.

In the case of the SRS for positioning, requirements need to be satisfied in consideration of IIoT scenario or use cases. To this end, a method to increase orthogonality or to reduce overhead may be required.

To this end, the number of symbols of SRS for positioning may be 1, 2, 4, 8, or 12. Also, the comb size for the positioning may be 2, 4, or 8. Here, the SRS may be a Zadoff-chu sequence and may be a sequence based on phase shift. Here, a CS may be value for phase shift, and each value that is phase-shifted based on a CS value may maintain orthogonality.

Also, for example, the UE may configure a parameter for the SRS for positioning based on higher layer signaling. In detail, the UE may configure the SRS through an SRS resource set for positioning (e.g., "SRS-PosResourceSet-r16") as a higher layer parameter. Here, an SRS resource set parameter for positioning may include an SRS resource set ID parameter for positioning (e.g., srs-PosResourceSetId-r16). Here, the SRS resource set ID parameter (e.g., srs-PosResourceSetId-r16) may include a resource set ID. Also, the SRS resource set parameter for positioning may include an SRS resource list parameter for positioning (e.g., srs-PosResourceIdList-r16). Here, the SRS resource list parameter for positioning may include a list of resource IDs within an SRS resource set. Also, the SRS resource set parameter for positioning may include a resource type parameter (e.g., resourceType-r16). Here, the SRS resource set parameter for positioning may include information regarding whether a resource is aperiodic, semi-persistent, or periodic. Also, the SRS resource set parameter for positioning may include a pathloss-related parameter for positioning (e.g., pathlossReferenceRS-Pos-r16). Here, the pathloss-related parameter for positioning may include information on a reference signal that is used as reference in relation to pathloss. For example, the reference signal that is used as reference may be at least one of an SSB of a serving cell, an SSB of a neighboring cell, and a DL PRS, and information thereon may be included in the pathloss-related parameter for positioning.

Also, the UE may configure SRS resources based on an SRS resource parameter for positioning (e.g., SRS-PosResource-r16) as a higher layer parameter. Here, the SRS resource parameter for positioning may include an SRS resource ID parameter for positioning (e.g., srs-PosResourceId-r16). Here, the SRS resource ID parameter for positioning may include an SRS resource set. Also, the SRS resource parameter for positioning may include a transmission comb parameter (e.g., transmissionComb-r16). Here, the transmission comb parameter may include information related to a comb to be transmitted. For example, the comb size may be one of 2, 4, and 8. Also, in detail, for example, the transmission comb parameter may indicate comb offset (combOffset) and cyclic prefix (combOffset) values if the comb size is 2. Also, for example, the transmission comb parameter may indicate comb offset (combOffset) and cyclic prefix (combOffset) values if the comb size is 4. Also, for example, the transmission comb parameter may indicate comb offset (combOffset) and cyclic prefix (combOffset) values if the comb size is 8.

Also, the SRS resource parameter for positioning may include a resource mapping parameter (e.g., resourceMapping-r16). Here, the, resource mapping parameter may indicate an SRS transmission start symbol within a slot. Here, the transmission start symbol may be 0 to 13. Also, the resource mapping parameter may indicate the number of symbols. For example, the number of symbols may be one of 1, 2, 4, 8, and 12.

The SRS resource parameter for positioning may include a frequency domain shift parameter (e.g., freqDomainShift-r16). Here, the frequency domain shift parameter may be information related to a start resource block (RB). For example, the RB may be 0 to 268.

Also, the SRS resource parameter for positioning may include a group or sequence hopping parameter (e.g., groupOrSequenceHopping-r16). Here, the group or sequence hopping parameter may include information regarding whether to perform group hopping for the SRS sequence, whether to perform sequence hopping, whether to perform both hopping, or whether to not perform both hopping.

Also, the SRS resource parameter for positioning may include a resource type parameter (e.g., resourceType-r16). Here, the resource type parameter may include information regarding whether a resource is aperiodic, semi-persistent, or periodic. For example, when the resource is aperiodic, the resource type parameter may include slot offset information. As another example, when the resource is semi-periodic or periodic, the resource type parameter may include periodicity and offset information.

The SRS resource parameter for positioning may include a sequence ID parameter (e.g., sequenceId-r16). Here, the sequence ID parameter may include SRS sequence ID information.

Also, the SRS resource parameter for position may include an SRS spatial relation parameter (e.g., SRS-SpatialRelationInfoPos-r16). Here, the SRS spatial relation parameter may include information on a reference signal that is used as reference in relation to a spatial relation. For example, the reference signal that is used as reference may be at least one of an SSB of a serving cell, an SSB of a neighboring cell, and a DL PRS. Also, the when the SSB is the reference signal that is used as reference, the SRS spatial relation parameter may further include cell ID and SSB index information.

For example, in a new communication system (e.g., NR), a method and apparatus for performing positioning using sidelink may be provided. For example, a UE that performs sidelink communication may perform sidelink communication based on at least one of incoverage, out-of-coverage, and partial coverage. Also, for example, as described above, the sidelink communication may support vehicle to everything (V2X), public safety, commercial service, and IIoT.

Also, for example, sidelink-based positioning may be performed. Here positioning may be performed based on at least one of time difference of arrival (TDOA), round trip time (RTT), angle of arrival (AOA), angle of departure (AOD) and reference signal time difference (RSTD), but may not be limited thereto. As another example, measurement for sidelink positioning may be used in combination with measurement for another RAT-based positioning (e.g., Uu based measurement), but is not limited to a specific embodiment.

Also, for example, in the case of performing sidelink positioning based on a new system, there is a need to determine signal design, resource allocation, measurement, related procedures, and other matters in terms of a physical layer related to a reference signal for sidelink positioning, which is described below. Also, for example, a method of reusing an existing reference signal or a reference signal-related procedure may be used for sidelink positioning, which is described below. Hereinafter, a method of performing sidelink-based positioning based on the above is described.

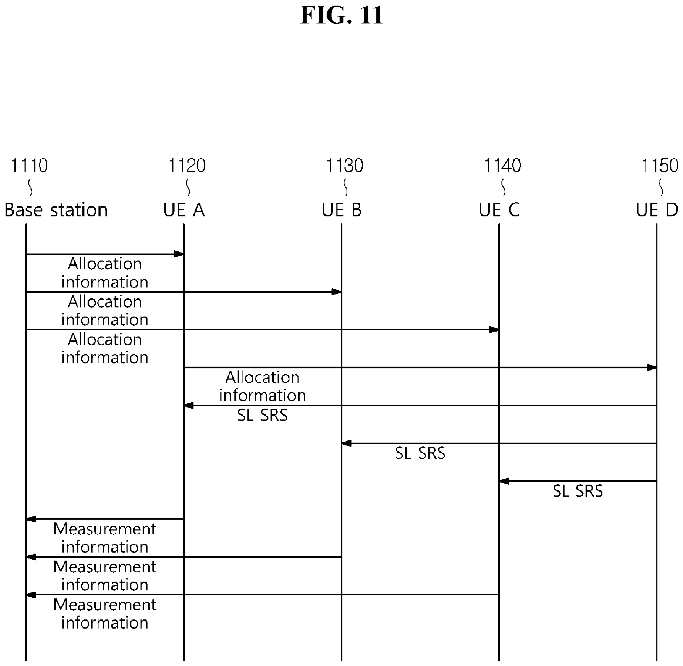

FIG. 11 illustrates a method of performing sidelink-based positioning, applicable to the present disclosure.

Referring to FIG. 11, sidelink-based positioning may be performed. As a specific example, in FIG. 11, a UE A 1120, a UE B 1130, and a UE C 1140 may be present within coverage of a base station 1110. For example, each of the UE A 1120, the UE B 1130, and the UE C 1140 may be in an RRC-connected state with the base station 1110, but the present disclosure may not be limited thereto. Here, a location of a UE D 1150 may be measured based on sidelink-based positioning.

Here, for example, sidelink communication may be possible between the UE A 1120 and the UE D 1150. As another example, the UE A 1120, the UE B 1130, the UE C 1140, and the UE D 1150 may perform group communication-based sidelink communication based on groupcast. For example, the UE A 1120 may be a master terminal in group communication, but the present disclosure is not limited to the aforementioned example.

Also, for example, the following description is made based on the aforementioned situation for clarity, but may not be limited thereto. Referring to FIG. 11, the base station 1110 may transmit allocation information to each of the UE A 1120, the UE B 1130, and the UE C 1140. Here, the allocation information may be information necessary for the UE D 1150 requiring location measurement to transmit a sidelink sounding reference signal (SL SRS). For example, the allocation information may include at least one of resource information and sequence information required for the UE D 1150 to transmit the SL SRS and may further include other information.

Here, for example, the allocation information may be transmitted from the base station 1110 to each of the UE A 1120, the UE B 1130, and the UE C 1140 through upper layer signaling (e.g., RRC). Here, for example, the allocation information may be allocated by a location server and allocated information may be transmitted to each of the UEs through the base station 1110, which may not be limited to a specific embodiment.

Then, UE A 1120 may transmit the allocation information to the UE D 1150. Here, the allocation information may be information required for the UE D 1150 to transmit the SL SRS. Here, for example, each of the UE A 1120, the UE B 1130, and the UE C 1140 may receive the SL SRS transmitted from the UE D 1150. Here, for example, the UE A 1120 may transmit the allocation information to the UE D 1150 through at least one of a physical sidelink control channel (PSCCH) and a physical sidelink shared channel (PSSCH), which is not limited to a specific embodiment. Then, the UE D 1150 may transmit the SL SRS, and each of the UE A 1120, the UE B 1130, and the UE C 1140 may receive the SL SRS transmitted from the UE D 1150.

Then, each of the UE A 1120, the UE B 1130, and the UE C 1140 may perform measurement based on the SL SRS and may acquire measurement information. Then, each of the UE A 1120, the UE B 1130, and the UE C 1140 may transmit the measurement information to the base station 1110. Here, the measurement information may be at least one of time difference of arrival (TDOA) and reference signal time difference (RSTD) as a value that is measured by each UE based on the SL SRS, but may not be limited thereto. For example, each of the UE A 1120, the UE B 1130, and the UE C 1140 may transmit a measurement value to the base station 1110. Then, the base station 1110 may acquire a location value of the UE D 1150 based on the measurement value received from each of the UEs. As another example, the measurement information may be a location value of the UE D 1150 that is calculated based on the SL SRS transmitted from the UE D 1150. That is, the measurement information may be the measurement value itself or may be the location value of the UE D 1150 derived based on the measurement value, which may not be limited to a specific form. Also, for example, the base station 1110 may further transmit the measurement information to the location server. However, the present disclosure may not be limited thereto. In the aforementioned manner, positioning may be performed.

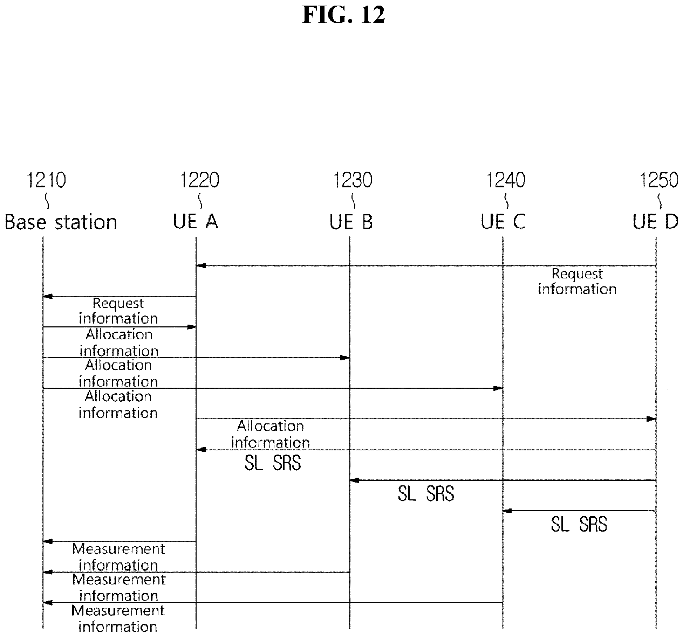

FIG. 12 illustrates a method of performing sidelink-based positioning, applicable to the present disclosure.

Referring to FIG. 12, sidelink-based positioning may be performed. As a specific example, in FIG. 12, a UE A 1220, a UE B 1230, and a UE C 1240 may be present within coverage of a base station 1210. For example, each of the UE A 1220, the UE B 1230, and the UE C 1240 may be in an RRC-connected state with the base station 1210, but the present disclosure may not be limited thereto. Here, a location of a UE D 1250 may be measured based on sidelink-based positioning.

Here, for example, sidelink communication may be possible between the UE A 1220 and the UE D 1250. As another example, the UE A 1220, the UE B 1230, the UE C 1240, and the UE D 1250 may perform group communication-based sidelink communication based on groupcast. For example, the UE A 1220 may be a master terminal in group communication, but the present disclosure is not limited to the aforementioned embodiment.

Also, for example, the following description is made based on the aforementioned situation for clarity, but may not be limited thereto. Referring to FIG. 12, the UE D 1250 may transmit request information to the UE A 1220. Here, the request information may be information requesting location measurement of the UE D 1250. Then, the UE A 1220 may transmit the request information to the base station 1210 based on the request information acquired from the UE D 1250. Here, for example, the base station 1210 may deliver the received request information to a location server, but the present disclosure is not limited to the aforementioned embodiment.

Then, the base station 1210 may transmit allocation information on an SL SRS to each of the UEs based on the request information. As another example, the base station 1210 may receive allocation information on the SL SRS from the location server based on the request information and, based thereon, may transmit the allocation information. The present disclosure is not limited to the aforementioned embodiment.

Then, the base station 1210 may transmit the allocation information to each of the UE A 1220, the UE B 1230, and the UE C 1240. Here, the allocation information may be information necessary for the UE D 1250 requiring location measurement to transmit an SL SRS. For example, the allocation information may include at least one of resource information and sequence information required for the UE D 1250 to transmit the SL SRS and may further include other information.

Here, for example, the allocation information may be transmitted from the base station 1210 to each of the UE A 1220, the UE B 1230, and the UE C 1240 through upper layer signaling (e.g., RRC). Here, for example, the allocation information may be allocated by the location server and allocated information may be transmitted to each of the UEs through the base station 1210, which may not be limited to a specific embodiment.

Then, the UE A 1220 may transmit the allocation information to the UE D 1250. Here, the allocation information may be information required for the UE D 1250 to transmit the SL SRS. Here, for example, each of the UE A 1220, the UE B 1230, and the UE C 1240 may receive the SL SRS transmitted from the UE D 1250. Here, for example, the UE A 1220 may transmit the allocation information to the UE D 1250 through at least one of a PSCCH and a PSSCH, which is not limited to a specific embodiment. Then, the UE D 1250 may transmit the SL SRS, and each of the UE A 1220, the UE B 1230, and the UE C 1240 may receive the SL SRS transmitted from the UE D 1250.

Then, each of the UE A 1220, the UE B 1230, and the UE C 1240 may perform measurement based on the SL SRS and may acquire measurement information. Then, each of the UE A 1220, the UE B 1230, and the UE C 1240 may transmit the measurement information to the base station 1210. Here, the measurement information may be at least one of TDOA and RSTD as a value that is measured by each UE based on the SL SRS, but may not be limited thereto. For example, each of the UE A 1220, the UE B 1230, and the UE C 1240 may transmit a measurement value to the base station 1210. Then, the base station 1210 may acquire a location value of the UE D 1250 based on the measurement value received from each of the UEs. As another example, the measurement information may be a location value of the UE D 1250 that is calculated based on the SL SRS transmitted from the UE D 1250. That is, the measurement information may be the measurement value itself or may be the location value of the UE D 1250 derived based on the measurement value, which may not be limited to a specific form. Also, for example, the base station 1210 may further transmit the measurement information to the location server. However, the present disclosure may not be limited thereto. In the aforementioned manner, positioning may be performed.

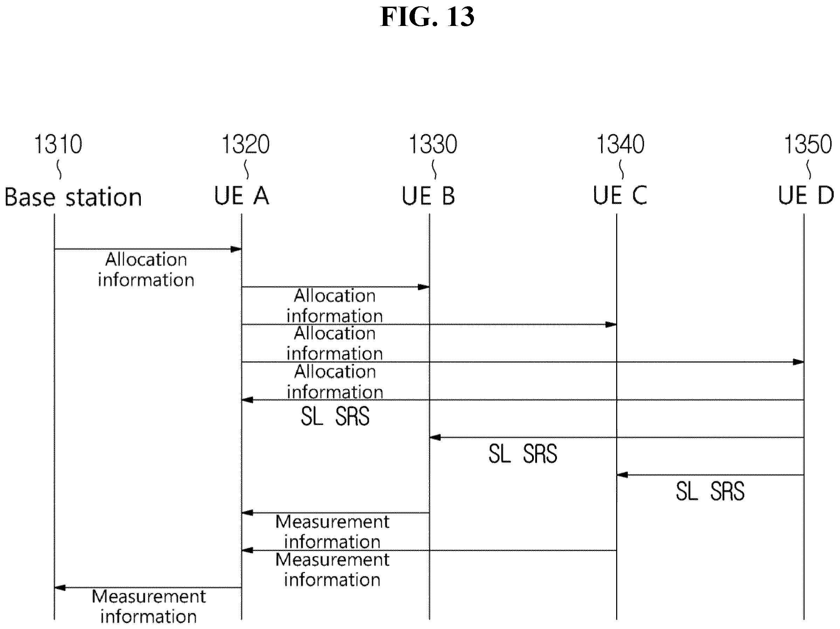

FIG. 13 illustrates a method of performing sidelink-based positioning, applicable to the present disclosure.

Referring to FIG. 13, sidelink-based positioning may be performed. As a specific example, in FIG. 13, a UE A 1320 may be present within coverage of a base station 1310. For example, the UE A 1320 may be in an RRC-connected state with the base station 1310, but the present disclosure may not be limited thereto. Here, a location of a UE D 1350 may be measured based on sidelink-based positioning.

Here, for example, sidelink communication may be possible between the UE A 1320 and a UE B 1330, sidelink communication may be possible between the UE A 1320 and a UE C 1340, and sidelink communication may be possible between the UE A 1320 and the UE D 1350. As another example, the UE A 1320, the UE B 1330, the UE C 1340, and the UE D 1350 may perform group communication-based sidelink communication based on groupcast. For example, the UE A 1320 may be a master terminal in group communication, but the present disclosure is not limited to the aforementioned example.

Also, for example, the following description is made based on the aforementioned situation for clarity, but may not be limited thereto. Referring to FIG. 13, the base station 1310 may transmit allocation information to the UE A 1320. Here, the allocation information may be information necessary for the UE D 1350 requiring location measurement to transmit an SL SRS. For example, the allocation information may include at least one of resource information and sequence information required for the UE D 1350 to transmit the SL SRS and may further include other information.

Here, for example, the allocation information may be transmitted from the base station 1310 to the UE A 1320 through upper layer signaling (e.g., RRC). Here, since the UE A 1320 is present within coverage of the base station 1310 and in an RRC connected state, the UE A 1320 may receive the allocation information from the base station 1310. Also, for example, the allocation information may be allocated by a location server and allocated information may be transmitted to each of the UEs through the base station 1310, which may not be limited to a specific embodiment.

Then, the UE A 1320 may transmit the allocation information to each of the UE B 1330 and the UE C 1340. Here, the allocation information may be information necessary for the UE D 1350 requiring location measurement to transmit the SL SRS. For example, the allocation information may include at least one of resource information and sequence information required for the UE D 1350 to transmit the SL SRS and may further include other information. That is, each of the UE B 1330 and the UE C 1340 may receive the aforementioned allocation information from the UE A 1350 to receive the SL SRS from the UE D 1350. Here, for example, the UE A 1320 may transmit the allocation information to each of the UE B 1330 and the UE C 1340 through at least one of a PSCCH and a PSSCH. Also, the UE A 1330 may transmit the allocation information to the UE D 1350. That is, the UE A 1330 may deliver the allocation information as information required for the UE D 1350 to transmit the SL SRS. Here, for example, the UE A 1320 may transmit the allocation information to the UE D 1350 through at least one of the PSCCH and the PSSCH, which is not limited to a specific embodiment. As described above, the UE D 1350 may transmit the SL SRS, and each of the UE A 1320, the UE B 1330,

and the UE C 1340 may receive the SL SRS transmitted from the UE D 1350.

Then, each of the UE A 1320, the UE B 1330, and the UE C 1340 may perform measurement based on the SL SRS and may acquire measurement information. Here, each of the UE B 1330 and the UE C 1340 may transmit the measurement information to the UE A 1320. Here, the measurement information may be at least one of TDOA and RSTD as a value that is measured by each UE based on the SL SRS, but may not be limited thereto. For example, the measurement information may be a measurement value itself or may be a location value of the UE D 1350 derived based on the measurement value, which may not be limited to a specific form. In more detail, the UE A 1320 may acquire the measurement value that is measured based on the SL SRS from each of the UE B 1330 and the UE C 1340 as the measurement information. Here, the UE A 1320 may acquire the location value of the UE D 1350 based on measurement values acquired from the UE B 1330 and the UE C 1340. Here, the UE A 1330 may transmit the location value of the UE D 1350 to the base station 1310 as the measurement information. Here, the base station 1310 may report the measurement information to the location server as the location value of the UE D 1350, which may not be limited to a specific embodiment.

As another example, the UE A 1320 may acquire measurement values measured based on the SL SRS from the UE B 1330 and the UE C 1340, as measurement information. Here, the UE A 1320 may transmit, to the base station 1310, a measurement value measured based on the SL SRS by the UE A 1320 with the measurement values acquired from the UE B 1330 and the UE C 1340. Here, the base station 1310 may acquire a location value of the UE D 1350 based on the measurement values of the UE A 1320, the UE B 1330, and the UE C 1340. For example, the base station 1310 may report the measurement information to the location server as the location value of the UE D 1350, which may not be limited to a specific embodiment.

As another example, the UE A 1320 may acquire the location value of the UE D 1350 derived from the measurement values measured based on the SL SRS from the UE B 1330 and the UE C 1340, as the measurement information, and may also transmit the same to the base station 1310. For example, the base station 1310 may report the measurement information to the location server as the location value of the UE D 1350, which may not be limited to a specific embodiment. In the aforementioned manner, positioning may be performed.

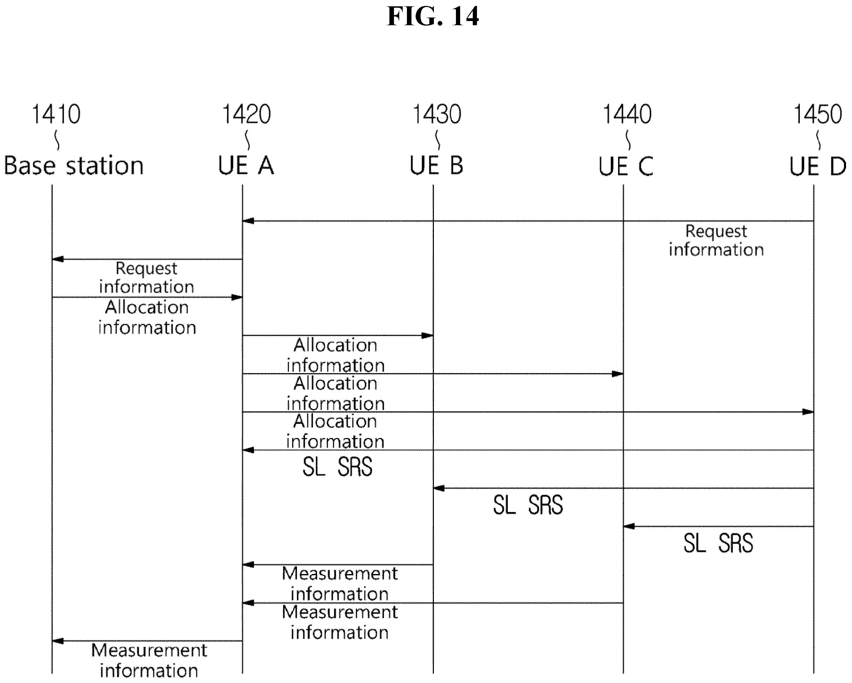

FIG. 14 illustrates a method of performing sidelink-based positioning, applicable to the present disclosure.

Referring to FIG. 14, sidelink-based positioning may be performed. As a specific example, in FIG. 14, a UE A 1420 may be present within coverage of a base station 1410. For example, the UE A 1420 may be in an RRC-connected state with the base station 1410, but the present disclosure may not be limited thereto. Here a location of a UE D 1450 may be measured based on sidelink-based positioning.

Here, for example, sidelink communication may be possible between the UE A 1420 and a UE B 1430, sidelink communication may be possible between the UE A 1420 and a UE C 1440, and sidelink communication may be possible between the UE A 1420 and the UE D 1450. As another example, the UE A 1420, the UE B 1430, the UE C 1440, and the UE D 1450 may perform group communication-based sidelink communication based on groupcast. For example, the UE A 1420 may be a master terminal in group communication, but is not limited to the aforementioned example.

Also, for example, the following description is made based on the aforementioned situation for clarity, but may not be limited thereto. Referring to FIG. 14, the UE D 1450 may transmit request information to the UE A 1420. Here, the request information may be information requesting location measurement of the UE D 1450. Then, the UE A 1420 may transmit the request information to the base station 1410 based on the request information acquired from the UE D 1420. Here, for example, the base station 1410 may deliver the received request information to a location server, but the present disclosure is not limited to the aforementioned example.

Then, the base station 1410 may transmit allocation information on an SL SRS to each of the UEs based on the request information. As another example, the base station 1410 may receive the allocation information on the SL SRS from the location server based on the request information and, based thereon, may transmit the allocation information, but the present disclosure may not be limited to the aforementioned example.

Referring to FIG. 14, the base station 1410 may transmit the allocation information to the UE A 1420. Here, the allocation information may be information necessary for the UE D 1450 requiring location measurement to transmit the SL SRS. For example, the allocation information may include at least one of resource information and sequence information required for the UE D 1450 to transmit the SL SRS and may further include other information.

Here, for example, the allocation information may be transmitted from the base station 1410 to the UE A 1420 through upper layer signaling (e.g., RRC). Here, since the UE A 1420 is present within coverage of the base station 1410 and in an RRC connected state, the UE A 1420 may receive the allocation information from the base station 1410. Here, for example, the allocation information may be allocated by the location server and allocated information may be transmitted to each of the UEs through the base station 1410, which may not be limited to a specific embodiment.

Then, the UE A 1420 may transmit the allocation information to each of the UE B 1430 and the UE C 1440. Here, the allocation information may be information necessary for the UE D 1450 requiring location measurement to transmit the SL SRS. For example, the allocation information may include at least one of resource information and sequence information required for the UE D 1450 to transmit the SL SRS and may further include other information. That is, each of the UE B 1430 and the UE C 1440 may receive the aforementioned allocation information from the UE A 1450 to receive the SL SRS from the UE D 1450. Here, for example, the UE A 1420 may transmit the allocation information to each of the UE B 1430 and the UE C 1440 through at least one of a PSCCH and a PSSCH, which is not limited to a specific embodiment. Also, the UE A 1430 may transmit the allocation information to the UE D 1450. That is, the UE A 1430 may deliver the allocation information as information required for the UE D 1450 to transmit the SL SRS. Here, for example, the UE A 1420 may transmit the allocation information to the UE D 1450 through at least one of the PSCCH and the PSSCH, which is not limited to a specific embodiment. As described above, the UE D 1450 may transmit the SL SRS, and each of the UE A 1420, the UE B 1430, and the UE C 1440 may receive the SL SRS transmitted from the UE D 1450.

Then, each of the UE A 1420, the UE B 1430, and the UE C 1440 may perform measurement based on the SL SRS and may acquire measurement information. Here, each of the UE B 1430 and the UE C 1440 may transmit the measurement information to the UE A 1420. Here, the measurement information may be at least one of TDOA and RSTD as a value that is measured by each UE based on the SL SRS, but may not be limited thereto. For example, the measurement information may be the measurement value itself or may be a location value of the UE D 1450 derived based on the measurement value, which may not be limited to a specific form. In more detail, the UE A 1420 may acquire measurement values measured based on the SL SRS from the UE B 1430 and the UE C 1440 as the measurement information. Here, the UE A 1420 may acquire the location value of the UE D 1450 based on the measurement values acquired from the UE B 1430 and the UE C 1440. Here, the UE A 1430 may transmit the location value of the UE D 1450 to the base station 1410 as the measurement information. Here, the base station 1410 may report the measurement information to the location server as the location value of the UE D 1450, which may not be limited to a specific embodiment.

As another example, the UE A 1420 may acquire measurement values measured based on the SL SRS from the UE B 1430 and the UE C 1440 as measurement information. Here, the UE A 1420 may transmit, to the base station 1410, a measurement value measured based on the SL SRS by the UE A 1420 with the measurement values acquired from the UE B 1430 and the UE C 1440. Here, the base station 1410 may acquire a location value of the UE D 1450 based on the measurement values of the UE A 1420, the UE B 1430, and the UE C 1440. For example, the base station 1410 may report the measurement information to the location server as the location value of the UE D 1450, which may not be limited to a specific embodiment.

As another example, the UE A 1420 may acquire the location value of the UE D 1450 derived from the measurement values measured based on the SL SRS from the UE B 1430 and the UE C 1440, as the measurement information, and may also transmit the same to the base station 1410. For example, the base station 1410 may report the measurement information to the location server as the location value of the UE D 1450, which may not be limited to a specific embodiment. In the aforementioned manner, positioning may be performed.

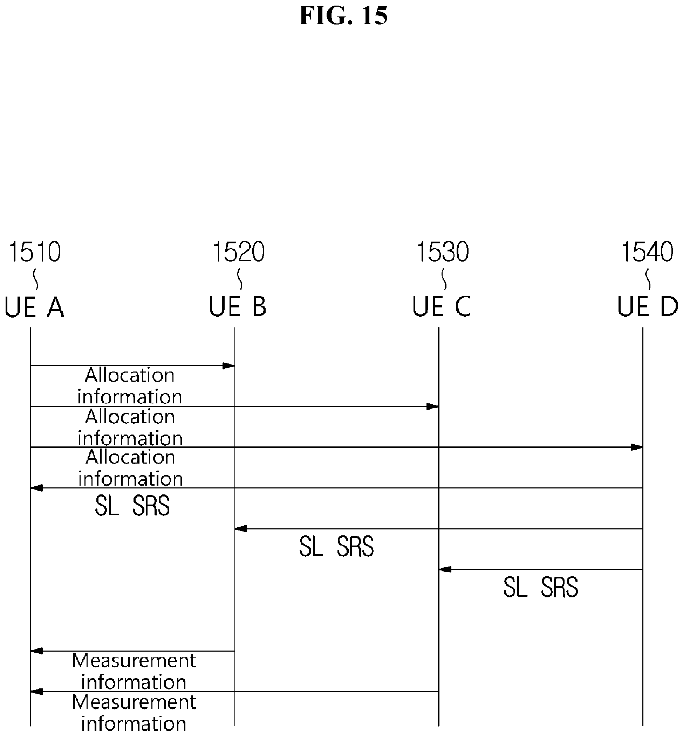

FIG. 15 illustrates a method of performing sidelink-based positioning, applicable to the present disclosure.

Referring to FIG. 15, sidelink-based positioning may be performed. As a specific example, in FIG. 15, positioning may be performed based on sidelink communication between UEs without base station control. For example, a location of a UE D 1540 may be measured based on sidelink-based positioning. Here, for example, sidelink communication may be possible between a UE A 1510 and a UE B 1520, sidelink communication may be possible between the UE A 1510 and a UE C 1530, and sidelink communication may be possible between the UE A 1510 and the UE D 1540. As another example, the UE A 1510 may perform group communication-based sidelink communication based on groupcast. For example, the UE A 1510 may be a master terminal in group communication, but is not limited to the aforementioned example. Also, for example, the following description is made based on the aforementioned configuration for clarity, but may not be limited thereto. Referring to FIG. 15, the UE A 1510 may generate allocation information. Here, the allocation information may be information necessary for the UE D 1540 requiring location measurement to transmit an SL SRS. For example, the allocation information may include at least one of resource information and sequence information required for the UE D 1540 to transmit the SL SRS and may further include other information.

Here, for example, the UE A 1510 may transmit the allocation information to each of the UE B 1520 and the UE C 1530. Here, the allocation information may be information necessary for the UE D 1540 requiring location measurement to transmit the SL SRS. For example, the allocation information may include at least one of resource information and sequence information required for the UE D 1540 to transmit the SL SRS and may further include other information. That is, each of the UE B 1520 and the UE C 1530 may receive the aforementioned allocation information from the UE A 1510 to receive the SL SRS from the UE D 1540. Here, for example, the UE A 1510 may transmit the allocation information to each of the UE B 1520 and the UE C 1530 through at least one of a PSCCH and a PSSCH, which is not limited to a specific embodiment. Also, the UE A 1510 may transmit the allocation information to the UE D 1540. That is, the UE A 1510 may deliver the allocation information as information required for the UE D 1540 to transmit the SL SRS. Here, for example, the UE A 1510 may transmit the allocation information to the UE D 1540 through at least one of the PSCCH and the PSSCH, which is not limited to a specific embodiment. As described above, the UE D 1540 may transmit the SL SRS, and each of the UE A 1510, the UE B 1520, and the UE C 1530 may receive the SL SRS transmitted from the UE D 1540.

Then, each of the UE A 1510, the UE B 1520, and the UE C 1530 may perform measurement based on the SL SRS, and may acquire measurement information. Here, each of the UE B 1520 and the UE C 1520 may transmit the measurement information to the UE A 1510. Here, the measurement information may be at least one of TDOA and RSTD as a value that is measured by each UE based on the SL SRS, but may not be limited thereto. For example, the measurement information may be a measurement value itself or may be a location value of the UE D 1540 derived based on the measurement value, which may not be limited to a specific form. In more detail, the UE A 1510 may acquire a measurement value that is measured based on the SL SRS from each of the UE B 1520 and the UE C 1530 as the measurement information. Here, the UE A 1510 may acquire the location value of the UE D 1540 based on the measurement values acquired from the UE B 1520 and the UE C 1530.

As another example, the UE A 1510 may acquire the location value of the UE D 1540 derived from the measurement values measured based on the SL SRS from the UE B 1520 and the UE C 1530, as the measurement information, which may not be limited to a specific embodiment. In the aforementioned manner, positioning may be performed.

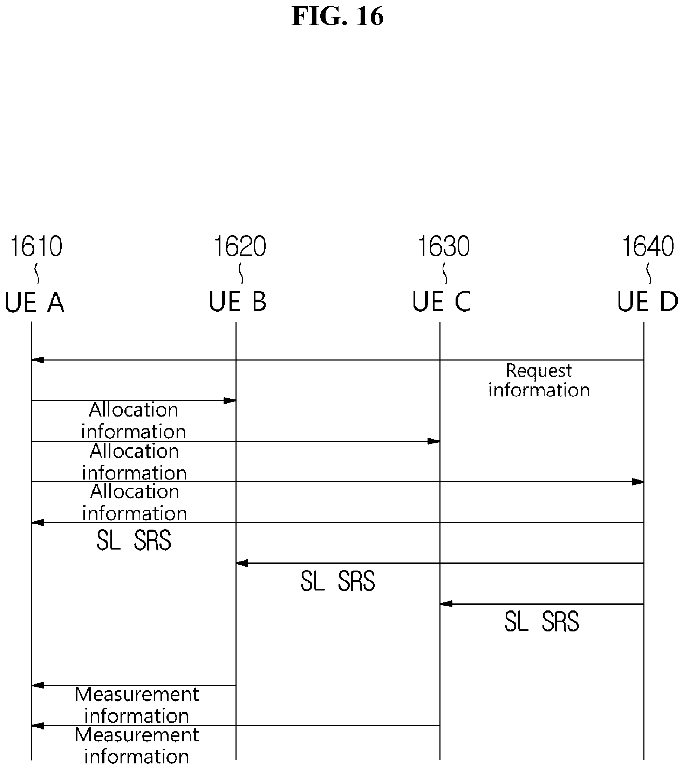

FIG. 16 illustrates a method of performing sidelink-based positioning, applicable to the present disclosure.

Referring to FIG. 16, sidelink-based positioning may be performed. As a specific example, in FIG. 16, positioning base performed based on sidelink communication between UEs without base station control. For example, a location of a UE D 1640 may be measured based on sidelink-based positioning. Here, for example, sidelink communication may be possible between a UE A 1610 and a UE B 1620, sidelink communication may be possible between the UE A 1610 and a UE C 1630, and sidelink communication may be possible between the UE A 1610 and the UE D 1640. As another example, the UE A 1610 may perform group communication-based sidelink communication based on groupcast. For example, the UE A 1620 may be a master terminal in group communication, but is not limited to the aforementioned example. Also, for example, the following description is made based on the aforementioned situation for clarity, but may not be limited thereto. Referring to FIG. 16, the UE D 1640 may transmit request information to the UE A 1610. Here, the request information may be information requesting location measurement of the UE D 1640, but is not limited to the aforementioned example.

Then, the UE A 1610 may generate allocation information. Here, the allocation information may be information necessary for the UE D 1640 requiring location measurement to transmit an SL SRS. For example, the allocation information may include at least one of resource information and sequence information required for the UE D 1640 to transmit the SL SRS and may further include other information.

Here, for example, the UE A 1610 may transmit the allocation information to each of the UE B 1620 and the UE C 1630. Here, the allocation information may be information necessary for the UE D 1640 requiring location measurement to transmit the SL SRS. For example, the allocation information may include at least one of resource information and sequence information required for the UE D 1640 to transmit the SL SRS and may further include other information. That is, each of the UE B 1620 and the UE C 1630 may receive the aforementioned allocation information from the UE A 1610 to receive the SL SRS from the UE D 1640. Here, for example, the UE A 1610 may transmit the allocation information to each of the UE B 1620 and the UE C 1630 through at least one of a PSCCH and a PSSCH, which is not limited to a specific embodiment. Also, the UE A 1610 may transmit the allocation information to the UE D 1640. That is, the UE A 1610 may deliver the allocation information as information required for the UE D 1640 to transmit the SL SRS. Here, for example, the UE A 1610 may transmit the allocation information to the UE D 1640 through at least one of the PSCCH and the PSSCH, which is not limited to a specific embodiment. As described above, the UE D 1640 may transmit the SL SRS, and each of the UE A 1610, the UE B 1620, and the UE C 1630 may receive the SL SRS transmitted from the UE D 1640.

Then, each of the UE A 1610, the UE B 1620, and the UE C 1630 may perform measurement based on the SL SRS and may acquire measurement information. Here, each of the UE B 1620 and the UE C 1620 may transmit the measurement information to the UE A 1610. Here, the measurement information may be at least one of TDOA and RSTD as a value that is measured by each UE based on the SL SRS, but may not be limited thereto. For example, the measurement information may be a measurement value itself or may be a location value of the UE D 1640 derived based on the measurement value, which may not be limited to a specific form. In more detail, the UE A 1610 may acquire measurement values measured based on the SL SRS from the UE B 1620 and the UE C 1630 as measurement information. Here, the UE A 1610 may acquire the location value of the UE D 1640 based on the measurement values acquired from the UE B 1620 and the UE C 1630.

As another example, the UE A 1610 may acquire the location information of the UE D 1640 derived from the measurement values measured based on the SL SRS from the UE B 1620 and the UE C 1630 as the measurement information, which may not be limited to a specific embodiment. In the aforementioned manner, positioning may be performed.

As another example, as described above, referring to FIGS. 11 to 16, allocation information may include at least one of sequence information and resource information on an SL SRS transmitted from a UE D. Here, for example, regarding SL SRS sequence generation, the existing SRS sequence may be considered and the existing SRS sequence may be derived based on Equation 3 and Equation 4.

Also, for example, a sequence group u for SRS sequence may be as shown in Equation 6 below. Here, the sequence group u and sequence number v may be determined based on groupOrSequenceHopping as upper layer parameters. Here, for example, $l'$ may be $l' \in \{0, 1, \ldots, N_{\text{symb}}^{\text{SRS}} - 1\}$ as an OFDM symbol number included in an SRS

resource.

[Equation 6]

$$u = \left( f_{\text{gh}}\left( n_{\text{s,f}}^{\mu}, l^{'} \right) + n_{\text{ID}}^{\text{SRS}} \right) \bmod 30$$

Also, for example, when a groupOrSequenceHopping parameter is set to "neither", the sequence group and the sequence number may be set as in Equation 7 below. That is, neither the sequence group and the sequence number may be used. On the contrary, when the groupOrSequenceHopping parameter is set to "groupHopping", group hopping may be applied while sequence hopping may not be applied, which may be as shown in Equation 8 below. Here, an initial value $c_{\text{init}}$ of pseudo-random sequence c(i) may be $n_{\text{ID}}^{\text{SRS}}$ at a radio frame start point of each initial value.

[Equation 7]

$$f_{\text{gh}}\left( n_{\text{s,f}}^{\mu}, l^{'} \right) = 0$$
$$v = 0$$

[Equation 8]

$$f_{\text{gh}}\left( n_{\text{s,f}}^{\mu}, l^{'} \right) = \left( \sum_{m=0}^{7} c\left( 8\left( n_{\text{s,f}}^{\mu} N_{\text{symb}}^{\text{slot}} + l_0 + l^{'} \right) + m \right) \cdot 2^{m} \right) \bmod 30$$
$$v = 0$$

Also, for example, when the groupOrSequenceHopping parameter is set to "sequenceHopping", only sequence hopping may be applied and group hopping may not be applied, which may be expressed as shown in Equation 9 below. Here, an initial value $c_{\text{init}}$ of pseudo-random sequence c(i) may be $n_{\text{ID}}^{\text{SRS}}$ at a radio frame start point of each initial value.

[Equation 9]

$$f_{\text{gh}}\left( n_{\text{s,f}}^{\mu}, l^{'} \right) = 0$$
$$v = \begin{cases} c\left( n_{\text{s,f}}^{\mu} N_{\text{symb}}^{\text{slot}} + l_0 + l^{'} \right) & M_{\text{sc},b}^{\text{SRS}} \geq 6 N_{\text{sc}}^{\text{RB}} \\ 0 & \text{otherwise} \end{cases}$$

Here, for example, the aforementioned groupOrSequenceHopping parameter may be included in an SRS-Resource IE or an SRS-PosResource IE. Also, the SRS sequence ID, $n_{\text{ID}}^{\text{SRS}}$, may be determined based on sequenceID as an upper layer parameter. Here, when the sequenceID parameter is included in the SRS-Resource IE, $n_{\text{ID}}^{\text{SRS}} \in \{0, 1, ..., 1023\}$. On the contrary, when the sequenceID parameter is included in the SRS-PosResource IE, $n_{\text{ID}}^{\text{SRS}} \in \{0, 1, ..., 65535\}$. That is, in the case of generating the SRS sequence for positioning, the SRS sequence ID range may be wider.

For example, as described above with reference to FIGS. 11 to 16, an SRS sequence ID of an SL SRS used for sidelink positioning may be transmitted from a base station to a UE through upper layer signaling, such as upper layer signaling (e.g., RRC), similar to the existing SRS for positioning. Here, the SRS sequence ID of the SL SRS may include 16 bits as $n_{\text{ID}}^{\text{SRS}} \in \{0, 1, ..., 65535\}$, which is the same as before. Here, sequence ID information of the SL SRS may be included in allocation information as sequence information on the SL SRS transmitted for location measurement of a UE D in FIGS. 11 to 16. Here, for example, the sequence ID of the SL SRS may be allocated from remaining sequence IDs, excluding an SRS ID allocated for a UL SRS, to be distinguished from the existing SRS for positioning.

As another example, the aforementioned sequence ID information of an SRS may be provided from a base station to a UE through upper layer signaling (e.g., RRC). Therefore, in FIGS. 11 to 14, the UE may acquire sequence ID information. However, as shown in FIGS. 15 and 16, the UE that performs sidelink communication without control of the base station may not acquire SRS ID information. Therefore, in FIGS. 15 and 16, the UE needs to determine an SRS ID by itself.

Here, for example, an SRS ID may be determined based on $N_{\mathrm{ID}}^{\mathrm{X}}$ of a UE D. For example, as described above, a UE A may configure the SRS ID based on $N^{X}_{\mathrm{ID}}$ received from the UE D based on sidelink communication between the UE A and the UE D. Here, for example, $N^{X}_{\mathrm{ID}}$ may be the same as Equation 10 below as a decimal number of CRC of a PSCCH associated with a PSSCH, but may not be limited thereto. Here, $p_i$ denotes each parity bit and L denotes the number of parity bits.

$$[\text{Equation } 10]$$

$$N_{\mathrm{ID}}^{\mathrm{X}} = \sum_{i=0}^{L-1} p_i \cdot 2^{L-1-i}$$

Here, $N^{X}_{\mathrm{ID}}$ for the UE D may use a 16-bit SRS ID calculated based on modular $2^{16}$ as a modular function.

As another example, the SRS ID may be configured based on $N^{X}_{\mathrm{ID}}$ bits. For example, since the SRS ID is applied based on a modular function in Equation 6, the SRS ID may be configured with $N^{X}_{\mathrm{ID}}$ bits.

As another example, a case of using an ID of the UE A may be considered. Here, the UE A's ID may be '$n^{SA}_{\mathrm{ID}}$ (sidelink group destination identity)' as ID included and indicated in sidelink assignment (SA), but may not be limited thereto. Here, when the SRS ID is configured based on 16 bits, the SRS ID may include 16 bits by adding 0 to $n^{SA}_{\mathrm{ID}}$. As another example, the SRS ID may be configured based on $n^{SA}_{\mathrm{ID}}$ and since the SRS ID is applied based on a modular function, the SRS ID may be configured with $n^{SA}_{\mathrm{ID}}$ bits.

As another example, as described above with reference to FIGS. 11 to 16, the allocation information may include at least one of sequence information and resource information on the SL SRS transmitted from the UE D. Here, for example, regarding SL SRS resource allocation information, the existing SRS resource allocation parameter may be considered. In more detail, a resource allocation parameter for an SL SRS included in the allocation information may be generated based on the aforementioned SRS-PosResourceSet and SRS-PosResource. For example, parameters in SL-SRS-PosResourceSet may include parameters based on parameters in SRS-PosResourceSet, as a resource set for the SL SRS for positioning. Also, for example, parameters in SL-SRS-PosResource may include parameters based on parameters in SRS-PosResource as resources for the SL SRS for positioning.

Here, SL-SRS PosResourceSet and SL-SRS PosResource need to be distinguished from the existing SRS PosResourceSet and SRS-PosResource that aim transmission to the base station. Considering this, SL-SRS PosResourceSet may be separately configured to be distinguishable from SRS PosResourceSet. Here, SL-SRS PosResourceSet may use resources excluding resources (SRS-PosResource) used by SRS PosResourceSets.

Here, for example, as shown in FIG 11 to 14, when sidelink-based positioning is performed based on the base station under the control of the base station, the SRS resource for the sidelink and the SRS resource for the base station transmission may be allocated separately. However, for example, as shown in Fig. 15 and 16, when the UE generates allocation information without the control of the base station, an available resource (SL-SRS-PosResource) used in a resource (SL-SRS-PosResourceSet) configured separately from SRS resource to be transmitted to the base station may be pre-defined in the UE. Here, the UE may select a resource for SL SRS transmission from the available resources (SL-SRS-PosResource) based on the pre-defined setting.

In the new communication system, positioning may be performed based on at least one of downlink/uplink, time difference/angle difference, RTT, and cell ID. Here, referring to a downlink PRS (DL PRS) for positioning, a DL PRS resource set may be configured to a single base station (or a transmission reception point (TRP)). Here, the DL PRS resource set may be a set of DL PRS resources. Each DL PRS resource within the DL PRS resource set may have each corresponding DL PRS resource ID. For example, in the new communication system (e.g., NR), each base station (or TRP) may perform communication using a plurality of beams. Here, each DL PRS resource ID may correspond to each corresponding beam transmitted from a single base station (or TRP). That is, each DL PRS resource within the DL PRS resource set may correspond to each beam.

Here, DL PRS configuration may include a DL PRS transmission schedule. The base station (or TRP) may indicate DL PRS configuration to the UE. Therefore, the UE may verify a DL PRS based on the indicated DL PRS configuration without performing blind detection. Numerologies for the DL PRS may be the same as numerologies for data transmission. For example, a CP length and a subcarrier spacing (SCS) for the DL PRS may be the same as a CP length and an SCS for data transmission.

Also, in one or more base stations (or TRPs), DL PRS resource sets may be transmitted through a positioning frequency layer. Here, since the DL PRS resource sets are transmitted through the same positioning frequency layer, an SCS, a CP type, center frequency, point A, bandwidth, and a start physical resource block (PRB), and a comb size may be configured to be the same. Here, the point A may be a value that indicates a location of resource block (RB) 0. The DL PRS resource sets may be transmitted through the same frequency layer. Here, the DL PRS sequence refers to a gold sequence, and may be a binary sequence. This may be the same as a DL PRS of the existing system. The DL PRS sequence ID may be 4096. This may be more than the sequence (1024) for cell ID. Also, the DL PRS may be modulated based on quadrature phase shift keying (QPSK), and may be transmitted based on a cyclic-prefix orthogonal frequency division multiplexing (CP-OFDM) method. Also, 12 symbols may be configured within a single slot as a time axis resource for the DL PRS, and up to comb-12 may be supported for the comb size.

More details may be as shown in Table 14 below. That is, an interval at which PRSs are assigned on the frequency axis may be different based on the comb size. In the LTE system, the DL PRS may be transmitted using all symbols within a single slot. However, in the NR system that is the new communication system, the DL PRS may be transmitted based on the different number of symbols as shown in Table 14 below.

[Table 14]

|  | 2 symbols | 4 symbols | 6 symbols | 12 symbols |
|---|---|---|---|---|
| Comb-2 | {0,1} | {0,1,0,1} | {0,1,0,1,0,1} | {0,1,0,1,0,1,0,1,0,1,0,1} |
| Comb-4 | NA | {0,2,1,3} | NA | {0,2,1,3,0,2,1,3,0,2,1,3}} |
| Comb-6 | NA | NA | {0,3,1,4,2,5} | {0,3,1,4,2,5,0,3,1,4,2,5} |
| Comb-12 | NA | NA | NA | {0,6,3,9,1,7,4,10,2,8,5,11} |

DL PRS transmission periodicity may be configured for each DL PRS resource set. For example, each base station (or TRP) may configure a plurality of DL PRS resource sets. A plurality of DL PRS resource sets with different periodicity may be present in the same base station (or TRP), and the periodicity may be variously set.

Resources assigned for DL PRS transmission (hereinafter, DL PRS resources) may be repeated 1, 2, 4, 6, 8, 16, or 32 times. An interval between the respective repeated DL PRS resources may be set to one of 1, 2, 4, 8, 16, and 32 slots, but is not limited to the aforementioned example.

In relation to a frequency allocation for the DL PRS resources, granularity of the DL PRS bandwidth may be 4 PRBs. A start PRB may be indicated to the UE using a parameter, and the UE may determine the start PRB based on the indicated parameter. For example, the minimum bandwidth for the DL PRS may be 24 PRBs, and the maximum bandwidth may be 272 PRBs.

In relation to the DL PRS, resource element (RE) offset may be configured on the frequency axis. Here, the RE offset may be configured to have constant offset on the frequency axis based on a comb pattern based on a first symbol of the DL PRS resource. The first symbol may be configured to the UE. Then, the remaining symbols may be configured to the UE. Then, the remaining symbols may be determined based on the RE offset based on the first symbol.

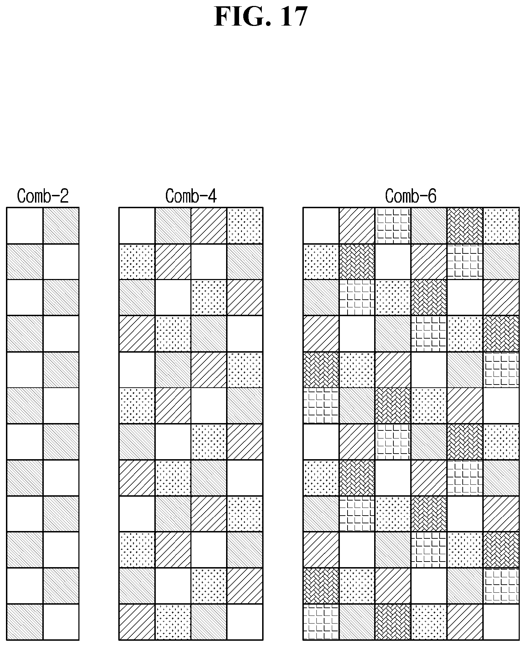

FIG. 17 illustrates a comb pattern applicable to the present disclosure.

A DL PRS RE pattern in a case in which the comb size and the number of symbols are the same is described as an example with reference to FIG. 17.

In more detail, a case in which the DL PRS is allocated in two symbols (0,1) as a case of comb size = 2 (Comb-2) may be considered. Here, the RE offset may be {0,1}. That is, the DL PRS may be allocated in a first symbol and a second symbol according to the RE offset {0,1}, and the frequency axis may be assigned based on comb size 2. A case in which the DL PRS is allocated in four symbols (0,1,2,3) as a case of comb size = 4 (Comb-4) may be considered. Here, the RF offset may be {0,2,1,3}. That is, the DL PRS may be allocated in symbols from the first symbol to the fourth symbol according to the RE offset {0,2,1,3}, and the frequency axis may be assigned based on comb size 4. A case in which the DL PRS is allocated in six symbols (0,1,2,3,4,5) as a case of comb size = 6 (Comb-6) may be considered. Here, the RE offset may be {0,3,1,4,2,5}. That is, the DL PRS may be allocated in symbols from the first symbol to the sixth symbol according to the RE offset {0,3,1,4,2,5}, and the frequency axis may be assigned based on comb size 6.

The present invention may support DL PRS muting. When a DL PRS to be muted is indicated to the UE, the UE may mute the corresponding DL PRS. Here, a DL PRS muting bitmap for a DL PRS resource set may be configured, and based thereon, the DL PRS to be muted may be indicated to the UE. Here, each bit of the DL PRS muting bitmap (hereinafter, option 1 bitmap) may correspond to each occasion or consecutive instances within the DL PRS resource set. Here, when a specific bit indicates muting, all DL PRSs within an occasion or consecutive instances corresponding to the specific bit may be muted.

Also, a bitmap indicating muting (hereinafter, option 2 bitmap) may indicate muting for each DL PRS resource within an occasion or instances for one period. Each bit of the bitmap may correspond to a repetition index of each DL PRS resource within the occasion or instances for one period. That is, each bit may correspond to one repetition of the DL PRS within each single DL PRS period, and muting may be indicated by each bit. For example, the bitmap may be set to one of 2, 4, 8, 16, and 32 bits.

In relation to the muting option, at least one of the option 1 bitmap and the option 2 bitmap may be configured. For example, only the option 1 bitmap may be configured. Also, for example, only the option 2 bitmap may be configured. Also, for example, all of the option 1 bitmap and the option 2 bitmap may be configured. Here, when all of the option 1 bitmap and the option 2 bitmap are configured, all DL PRS resources within an occasion indicated to be muted based on option 1 may be muted and DL PRS resources indicated to be muted by the option 2 bitmap in an occasion not indicated to be muted by the option 1 bitmap may be muted.

In the new communication system (e.g., NR), a DL PRS may be generated, and positioning may be performed. Here, referring to Table 14 described above, there may be 12 fully orthogonal resources within a single slot. Here, when the DL PRS is allocated in two symbols as a case of comb size = 2 (comb-2), the number of orthogonal resources may be two and six may be additionally distinguished based on the symbol offset. Also, when the DL PRS is allocated in four symbols as a case of comb size = 4, the number of orthogonal resources may be four and three may be additionally distinguished based on the symbol offset. Also, when the DL PRS is allocated in six symbols as a case of comb size = 6 (comb-6), the number of orthogonal resources may be six and two may be additionally distinguished based on the symbol offset. Also, when the DL PRS is allocated in 12 symbols as a case of comb size = 12 (comb-12), the number of orthogonal resources may be 12 and only one may be distinguished based on the symbol offset.

In relation to the DL PRS, in the new communication system, up to 64 TRPs may be supported in a single frequency layer, and 64 resources may be assigned for each TRP. Considering this, DL PRS ID may be 4096 (64*64).

For example, considering scenarios in Table 9 and Table 10 above as a case in which the UE operates based on the IIoT scenario in the band of 120 kHz, 18 TRPs may be supported. Here, considering that 64 beams are supported per TRP, each of 64 resources may be supported for the DL PRS. Therefore, the total number of resources required may be 1152 (=18*64). Here, fully orthogonal resources within a single slot may be 12 symbols, so 96 (1152/12=96) slots may be required in consideration of 1152 resources. Here, 96 slots may correspond to 12 ms at 120 kHz.

Meanwhile, considering the IIoT scenario, positioning related delay requirements may be set to 10 ms or less as described above. Therefore, if (96) slots corresponding to the above 12 ms are used, requirements (10 ms) for delay may not be satisfied. That is, a method of efficiently assigning DL PRS resources may be required.

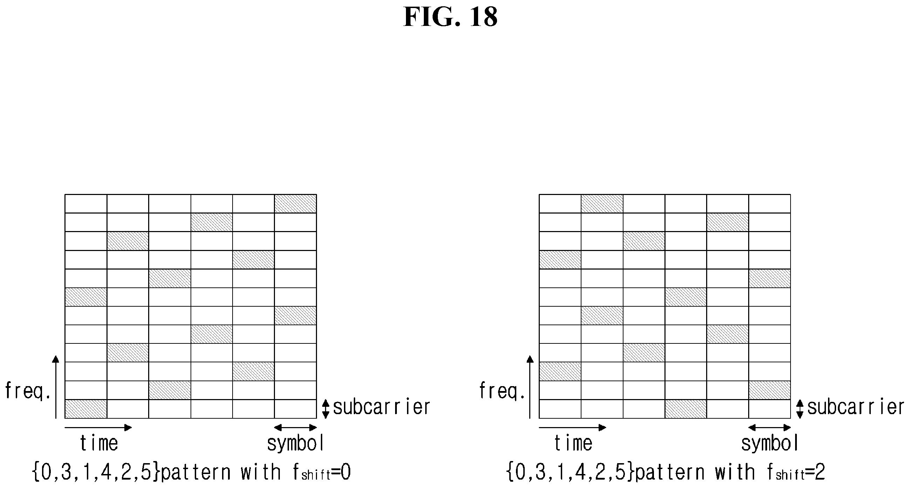

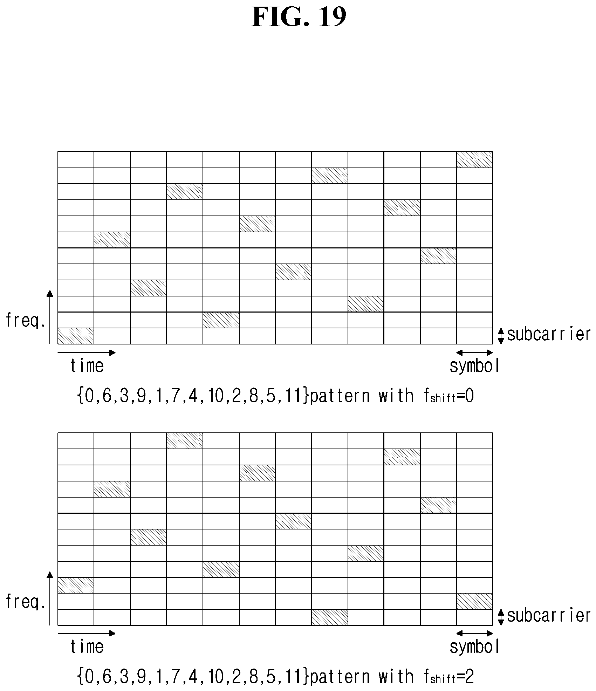

FIGS. 18 and 19 illustrate a method of performing a cyclic prefix based on a DL PRS allocation pattern applicable to the present disclosure. Orthogonality of the DL PRS allocation pattern may be broken when performing both a frequency axis cyclic prefix and a time axis cyclic prefix. Therefore, when performing the cyclic prefix based on the DL PRS allocation pattern, only the frequency axis cyclic prefix may be possible.

Referring to FIG. 18, when {0,3,1,4,2,5} is a pattern in which a DL PRS is allocated in six symbols as a case of comb size 6, six patterns may be possible with the frequency axis cyclic prefix. FIG. 18 may be a resource allocation method when f=0 and when f=2.

Referring to FIG. 19, when {0,6,3,9,1,7,4,10,2,8,5,11} is a pattern in which a DL PRS is allocated in 12 symbols as a case of comb size 12, 12 patterns may be possible with the frequency axis cyclic prefix. FIG. 19 may be a resource allocation method when f=0 and when f=2.

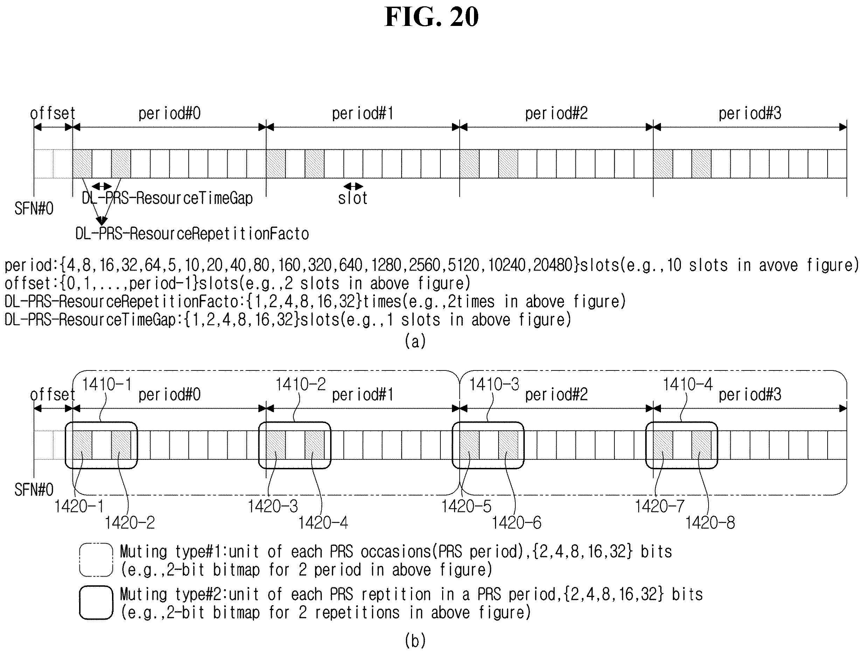

FIG. 20 illustrates a DL PRS resource allocation method applicable to the present disclosure.

In the communication system according to the present disclosure, DL PRS muting may be supported. When a DL PRS to be muted is indicated to the UE, the UE may mute the corresponding DL PRS. Here, a DL PRS muting bitmap for a DL PRS resource set may be configured, and based thereon, the DL PRS to be muted may be indicated to the UE. Here, each bit of the DL PRS muting bitmap (hereinafter, option 1 bitmap) may correspond to each occasion or consecutive instances within the DL PRS resource set. Here, each DL PRS occasion may correspond to all DL PRS resources (including repeated transmission) within each DL PRS period. That is, a single DL PRS occasion may correspond to one DL PRS period.

When a specific bit indicates muting, all DL PRSs within an occasion or consecutive instances corresponding to the specific bit may be muted. For example, as described above, the DL PRS of the existing system (LTE) may be muted based on an occasion basis. As another example, a bitmap indicating muting (hereinafter, option 2 bitmap) may indicate muting for each DL PRS resource within an occasion or instances for one period. Here, each bit of the bitmap may correspond to a repetition index of each DL PRS resource within the occasion or instances for one period (i.e., each bit corresponds to a single repetition of the DL PRS within each single DL PRS), and muting may be indicated by each bit. Here, the bitmap may be set to one of 2, 4, 8, 16, and 32 bits.

For example, in relation to the muting option, at least one of the option 1 bitmap and the option 2 bitmap may be configured. For example, only the option 1 bitmap may be configured. Also, for example, only the option 2 bitmap may be configured. For example, all of the option 1 bitmap and the option 2 bitmap may be configured. Here, when all of the option 1 bitmap and the option 2 bitmap are configured, all DL PRS resources within an occasion indicated to be muted based on option 1 may be muted and DL PRS resources indicated to be muted by the option 2 bitmap in an occasion not indicated to be muted may be muted.

Referring to (a) of FIG. 20, the UE may verify DL PRS period and offset indicated based on DL PRS configuration. In (a) of FIG. 20, the period is configured with 10 slots and the offset is configured with two slots, but it is only an example and is not limited to the aforementioned example. Also, the UE may verify a repetition pattern of DL PRS resource within the period through "DL-PRS-ResourceRepetitionFactor" indicated based on DL PRS configuration. Also, although "DL-PRS-ResourceRepetitionFactor" is configured to indicate two repetitions, it is only an example and is not limited to the aforementioned example. The UE may verify a time interval between DL PRS resources within one period through "DL-PRS-ResourceTimeGap" indicated based on DL PRS configuration. For example, in (a) of FIG. 20, "DL-PRS-Resource-TimeGap" is configured with a single slot, but it is only an example and is not limited to the aforementioned example.

Referring to (b) of FIG. 20, the UE may perform muting based on the option 1 bitmap. For example, the option 1 bitmap may be a muting bitmap for two periods with 2 bits, and each bit corresponds to one occasion corresponding to one period. Here, the UE may perform muting on the corresponding occasion based on each bit. Also, for example, the option 2 bitmap may be 2 bits and, within one period, repetition of each DL PRS may correspond to each bit.

When muting is indicated to the UE based on the option 1 bitmap, the UE may recognize that all DL PRSs of the corresponding occasion are muted, and may perform positioning. On the other hand, in the case of the option 2 bitmap, a DL PRS indicated to be muted through the option 2 bitmap in an occasion not indicated to be muted to the UE may be muted. That is, the UE may perform positioning only for a DL PRS indicated to not be muted by all of the option 1 bitmap and the option 2 bitmap among DL PRSs. As a detailed embodiment, in (b) of FIG. 20, each of DL PRS occasions 1410-1, 1410-2, 1410-3, and 1410-4 may correspond to each PRS period. Here, the first DL PRS occasion 1410-1 may correspond to "period#0", the second DL PRS occasion 1410-2 may correspond to "period#1", the third DL PRS occasion 1410-3 may correspond to "period#2", and the fourth DL PRS occasion 1410-4 may correspond to "period#3".

Since each bit of the option 1 bitmap corresponds to a DL PRS occasion, the option 1 bitmap may be 2 bits. Here, if a bit corresponding to the first DL PRS occasion 1410-1 in the 2-bit option 1 bitmap corresponding to the first DL PRS occasion 1410-1 and the second DL PRS occasion 1410-2 indicates muting, all DL PRS resources 1420-1 and 1420-2 within the first DL PRS occasion 1410-1 are muted. Also, if a bit corresponding to the second DL PRS occasion 1410-2 in the 2-bit option 1 bitmap indicates muting, all DL PRS resources 1420-3 and 1420-4 within the second DL PRS occasion 1410-2 are muted.

Meanwhile, if a bit corresponding to the third DL PRS occasion 1410-3 in the 2-bit option 1 bitmap corresponding to the third DL PRS occasion 1410-3 and the fourth DL PRS occasion 1410-4 indicates muting, all DL PRS resources 1420-5 and 1420-6 within the third DL PRS occasion 1410-3 are muted. Also, if a bit corresponding to the fourth DL PRS occasion 1410-4 in the 2-bit option 1 bitmap indicates muting, all DL PRS resources 1420-7 and 1420-8 within the fourth DL PRS occasion 1410-4 are muted.

Also, repetitions of DL PRS resource may be included in each of the DL PRS occasions 1410-1, 1410-2, 1410-3, and 1410-4. For example, the first DL PRS occasion 1410-1 includes two repetitions (1420-1 and 1420-2) of the DL PRS resource. The second DL PRS occasion 1410-2 also includes two repetitions (1420-3 and 1420-4) of the DL PRS resource. The third DL PRS occasion 1410-3 also includes two repetitions (1420-5 and 1420-6) of the DL PRS resource, and the fourth DL PRS occasion 1410-4 also includes two repetitions (1420-7 and 1420-8) of the DL PRS resource.

Here, each bit of the option 2 bitmap may correspond to a repetition of each DL PRS resource. Therefore, within the first DL PRS occasion 1410-1, the option 2 bitmap is configured with 2 bits by two repetitions (1420-1 and 1420-2) of the DL PRS resource.

Here, if the option 1 bitmap indicates that the first DL PRS occasion 1410-1 is to be muted, two repetitions (1420-1 and 1420-2) of the DL PRS resource are muted regardless of the option 2 bitmap. On the other hand, if the option 1 bitmap indicates that the first DL PRS occasion 1410-1 is to not be muted, muting of two repetitions (1420-1 and 1420-2) of the DL PRS resource is indicated by the option 2 bitmap. Here, if a bit corresponding to the first repetition (1420-1) of the DL PRS resource in the 2-bit option 2 bitmap indicates muting, the corresponding DL PRS resource 1420-1 is muted. Also, if a bit corresponding to the second repetition (1420-2) in the 2-bit option 2 bitmap indicates muting, the corresponding DL PRS resource 1420-2 is muted. The option 2 bitmap may be applied when the option 1 bitmap indicates not muting.

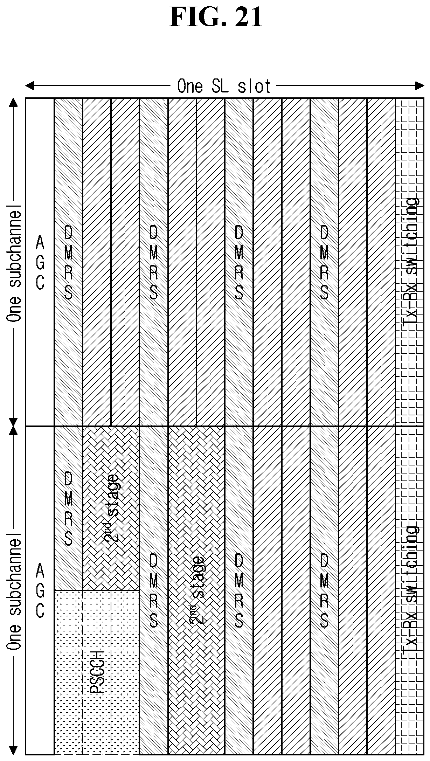

Also, for example, FIG. 21 illustrates a structure of an NR sidelink slot to which the present disclosure may apply.

Referring to FIG. 21, a single sidelink (SL) slot includes a single auto gain control (AGC) symbol. Also, the single SL slot includes a single Tx-Rx switching symbol. In a single SL slot, the PSSCH that is a data transmission channel is transmitted through at least one subchannel (e.g., two subchannels in the case of FIG. 21). Also, in the time domain, PSCCH (1st SCI), 2nd SCI, PSSCH (Data), and DMRS for demodulation may be transmitted to remaining OFDM symbols excluding the AGC symbol and the Tx-Rx switching symbol. In detail, locations of PSCCH (1st SCI), 2nd SCI, PSSCH (Data), and DMRS for demodulation may be as shown in FIG. 21, but are not limited thereto. For example, in FIG. 21, the PSCCH and the 2nd SCI are present in the first subchannel, and the PSSCH and the DMRS may be allocated considering this. As another example, in FIG. 21, the second subchannel is a subchannel in which the PSCCH and the 2nd SCI are absent, and the PSSCH and the DMRS may be allocated as shown in FIG. 21.

Here, the number of OFDM of the PSSCH DMRS may be set to one or more depending on higher layer configuration. The PSCCH (1st SCI) receives decoding using the DMRS of the PSCCH (i.e., PSCCH DMRS), and is equally allocated and transmitted every four resource elements within a single resource block (RB). On the other hand, the 2nd SCI is decoded using the PSSCH DMRS.

Also, for example, frequency division multiplexing (FDM), time division multiplexing (TDM), and spatial division multiplexing (SDM) may all be supported in a single resource pool related to NR sidelink. That is, in a single resource pool, each of resources may be split and used based on frequency, time, and space, thereby improving resource efficiency.

Also, numerology and waveform for sidelink may be considered, which may be as shown in Table 15 below. In detail, in relation to PSSCH/PSCCH and PSFCH in sidelink, SCS and CP length supported in each of FR1 and FR2 may be as shown in Table 15 below. Here, the waveform may support only OFDM without supporting DFT-S-OFDM, but may not be limited thereto. A sidelink-synchronization signal block (SL-SSB) may be independently defined for each frequency range, which may be similar to NR-Uu.

[Table 15]

|  | FR 1 | FR2 |
|---|---|---|
| PSSCH/PSCCH and PSFCH | - Normal CP for 15 kHz, 30 kHz, 60 kHz<br>- Extended CP for 6 0kHz | - Normal CP for 60 kHz, 120 kHz,<br>- Extended CP for 60 kHz |
| note | No support of DFT-S-OFDM for NR SL in Rel-16 | |

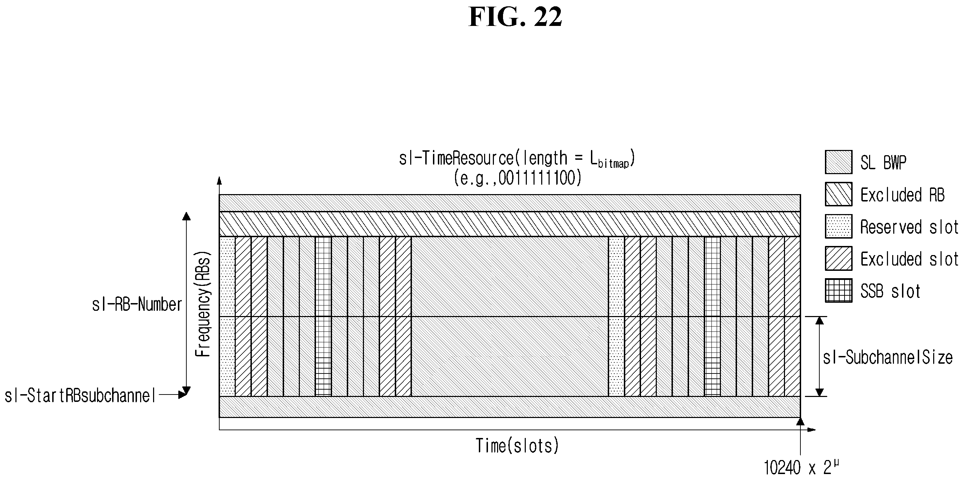

FIG. 22 illustrates NR sidelink resource pool configuration to which the present disclosure may apply. Referring to FIG. 22, a resource pool may represent resources in time and frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in NR sidelink, at least one of a resource pool time period, a sidelink slot set within a single resource pool application duration (sl-TimeResource (length = $L_{bitmap}$)), the first symbol for a set of consecutive symbols within a single slot, and the number of consecutive symbols may be configured. As frequency resources, at least one of a bandwidth of one subchannel (e.g., sl-SubchannelSize = {10, 15, 20, 25, 50, 75 and 100} RBs), the entire bandwidth indicated by the number of consecutive subchannels (set of consecutive subchannels) (e.g., sl-NumSubchannel = {1~27}), and a location of the first subchannel of the resource pool in the frequency domain (sl-StartRBsubchannel={0~265}) may be configured. For example, resources in the time domain and the frequency domain may be configured based on higher layer parameters. In FIG. 22, frequency resources corresponding to an excluded RB may represent some remaining RBs that do not exactly match a subchannel size (i.e., do not correspond to the number of RBs constituting a single subchannel). Here, the corresponding resources may not be used in NR sidelink. Also, for example, a reserved slot may represent a remaining slot in a situation in which a multiple unit of a length of a bitmap (e.g., sl-TimeResource) on time resources is not established, and may not be used as NR sidelink resources.

In the following, a method of performing positioning based on a sidelink (SL) PRS is described based on the above.

For example, at least one SL resource pool may be configured within a single SL BWP within a single carrier. Here, resources of the SL resource pool may be configured based on time resources of a slot set unit and frequency resources of a consecutive subchannel set unit. Here, as time resources for SL resource pool configuration, at least one of an SL resource pool time period, a sidelink slot set within a single SL resource pool application duration (sl-TimeResource (length = L_bitmap)), the first symbol for a set of consecutive symbols within a single slot, and the number of consecutive symbols may be configured, which is described above. Here, sidelink communication may be performed through the aforementioned sidelink slot set and symbols within the slot set.

For example, an SL PRS may be allocated in consideration of the sidelink slot set within the SL resource pool application duration (sl-TimeResource (length = L_bitmap)). Since sidelink communication may be performed only in available slots indicated by the sidelink slot set (sl-TimeResource (length = L_bitmap)), the SL PRS may also be assigned in consideration of the sidelink slot set (sl-TimeResource (length = L_bitmap)). For example, the sidelink slot set (sl-TimeResource (length = L_bitmap)) may be set to one of 10 bits to 160 bits. That is, when the sidelink slot set (sl-TimeResource (length = L_bitmap)) includes 10 bits, SL resources may be indicated for 10 slots by indicating a single slot per bit. When the sidelink slot set (sl-TimeResource (length = L_bitmap)) includes 160 bits, 160 slots may be indicated by indicating a single slot per bit.

Here, SL PRS configuration may include an SL PRS transmission schedule and may be configured to the UE. Therefore, the UE may verify an SL PRS based on the indicated SL PRS configuration without performing blind detection. Numerologies for the SL PRS may be the same as numerologies for sidelink data transmission. For example, a CP length and an SCS for the SL PRS may be the same as a CP length and an SCS for sidelink data transmission.

For example, based on SL PRS configuration, an SL PRS resource set may be configured to a single UE for SL PRS allocation for sidelink positioning. Here, the SL PRS resource set may be a set of SL PRS resources. Each SL PRS resource within the SL PRS resource set may have each corresponding SL PRS resource ID. Also, an SL PRS period may be configured for each SL PRS resource set, and all SL PRS allocation within the corresponding SL PRS resource set may have the same period. Also, for example, a plurality of SL PRS resource sets may be configured to a single UE.

Here, period P for SL PRS assignment may be as shown in Equation 11 below. In detail, the period P for SL PRS allocation may be determined by considering a sidelink slot set (sl-TimeResource (length = L_bitmap)) as time resources of the SL resource pool. The sidelink communication may use a slot corresponding to a portion corresponding to "1" as sidelink resources in applying the sidelink slot set (sl-TimeResource (length = L_bitmap)) for the SL resource pool, and SL PRS allocation may also be performed only on corresponding resource. Considering the above, the SL PRS allocation may also be determined in consideration of the sidelink slot set (sl-TimeResource (length = L_bitmap)). Therefore, the SL PRS allocation period P may be configured as shown in Equation 11. Here, A may be an integer from 1 to M. Since the maximum value of the sidelink slot set (sl-TimeResource (length = L_bitmap)) may be 160 bits, M may be up to 128 (160*128=20480). Here, since a slot may be 1 ms in 15 kHz SCS, only 10240 slots may be supported. In 15 kHz SCS, it may be up to 64(160*64=10240). As another example, A may be set to a value of $2^n$. That is, A may be set to 1, 2, 4, 8, 16, ..., $2^n$, and the maximum value of A may be $2^n$=128. Here, in the case of 15 kHz SCS, the maximum value of A may be $2^n$=64.

That is, the period P for SL PRS assignment may be determined in consideration of L_bitmap that is the sidelink slot set.

$$[\text{Equation 11}]$$

$$P = A \cdot L\_bitmap$$

Also, for example, an SL PRS muting bitmap may be configured in an SL PRS resource set. In detail, when an SL PRS to be muted is indicated to the UE, the UE may mute the corresponding SL PRS. Here, the SL PRS muting bitmap for the SL PRS resource set may be configured and, based thereon, the SL PRS to be muted may be indicated to the UE. Here, each bit of the SL PRS muting bitmap (hereinafter, option 1 bitmap) may correspond to each occasion or consecutive instances within the SL PRS resource set. Here, when a specific bit indicates muting, all SL PRSs within an occasion or consecutive instances corresponding to the specific bit may be muted.

Also, a bitmap indicating muting (hereinafter, option 2 bitmap) may indicate muting for each SL PRS resource within an occasion or instances for one period. Each bit of the bitmap may correspond to a repetition index of each SL PRS resource within the occasion or instances for one period. That is, each bit may correspond to one repetition of the SL PRS within each single SL PRS period, and muting may be indicated by each bit. For example, SL PRS resources may be repeated 1, 2, 4, 6, 8, 16, or 32 times. An interval between the respective SL PRS resources repeated may be configured to one of 1, 2, 4, 8, 16 and 32 slots, but is not limited to the aforementioned example. In relation to the muting option, at least one of the option 1 bitmap and the option 2 bitmap may be configured. For example, only the option 1 bitmap may be configured. Also, for example, only the option 2 bitmap may be configured. Also, for example, all of the option 1 bitmap and the option 2 bitmap may be configured. Here, when all of the option 1 bitmap and the option 2 bitmap are configured, all SL PRS resources within an occasion indicated to be muted may be muted based on option 1, and SL PRS resources indicated to be muted by the option 2 bitmap in an occasion not indicated to be muted by the option 1 bitmap may be muted.

Here, the bitmap may be set to one of 2, 4, 8, 16, and 32 bits. For example, the aforementioned PRS occasion or consecutive instances may correspond to one period P shown in Equation 11 above.

Here, when a value of P is determined as shown in Equation 11 above, the period P may not be repeated based on a bitmap unit (2/4/8/16/32) in the entire duration, and a section not indicated by the bitmap may be present. In detail, for example, a case in which, among 20480 slots, 4480 slots 1) are not uplink slots, 2) are SSB slots, or 3) are reserved slots, and remaining slots other than slots excluded from SL resources are 16000 may be considered. In the case of applying P=A·L_bitmap=100 slots based on Equation 11, 160 occasions may be present based on 16000 slots among 20480 slots. Here, the occasion may indicate SL PRS muting based on repetitive application of the bitmap unit (2/4/8/16/32), and the period P and the bitmap unit are divisible numbers, so there may be no issue in indicating. However, as another example, when, among 20480 slots, 3480 slots are excluded as 1) not uplink slots, 2) SSB slots, or 3) reserved slots, resource assignment to the remaining 17000 slots may be considered. In the case of applying P=A·L_bitmap=100 slots based on Equation 11, 170 occasions may be present based on 17000 slots among 20480 slots. Here, except for 2 among bitmap units indicating the respective occasions, remaining units (4/8/16/32) do not match the period P. Considering the above, Equation 12 below may be considered to apply a bitmap for option 1. In Equation 12, B denotes the number of occasions. Also, k denotes a bitmap unit, and int(B/k) denotes the number of times the bitmap is repeatedly applied as is. Here, int(x) denotes an integer value of x. Then, bits corresponding to least significant bit (LSB) in the bitmap for B- k· int(B/k) may be sequentially applied to occasions that remain after repeatedly transmitting the bitmap. Through the above, resources to be muted may be indicated even when the period P and the bitmap units are not divided.

In detail, for example, as described above, in the case of using 17000 slots among 20480 slots as resources, B may be 17000/(A·L_bitmap=100)=170. That is, 170 occasions may be present. Here, when the bitmap unit is 16 (k=16), the bitmap may be repeated ten (int(170/16)) times. That is, the length-16 bitmap may be repeatedly applied as ten times. Then, muting may be indicated by applying LSB 10 bits of the length-16 bitmap for ten occasions. Also, for example, in the case of 15 kHz SCS in equation below, 10240 may be applied instead of 20480, which is described above.

[Equation 12]

$$B=(\text{number of slots available as sidelink resources among 20480 slots})/(A\cdot L\_bitmap)$$

As another example, in one occasion with period P, an SL PRS may be repeatedly allocated and transmitted in 1, 2, 4, 8, 16, and 32 slots. Here, as described above, an interval between SL PRS slots repeatedly allocated and transmitted may be 1, 2, 4, 8, 16, or 32 slots. Here, when the period P is determined based on Equation 11, the SL PRS may be repeatedly allocated and transmitted in 1, 2, 4, 8, 16, and 32 slots in one occasion. However, SL PRS transmission may indicate that L_bitmap is applied repeatedly A times in one occasion based on the period P, and a bit value within L_bitmap may be limited to slots corresponding to "1". That is, repeated allocation and transmission of the SL PRS may be performed on slots available as SL resources based on L_bitmap. Also, an interval between slots to which the SL PRS is repeatedly allocated and transmitted may be 1, 2, 4, 8, 16, or 32 slots. Here, for example, since L_bitmap may be applied repeatedly A times in one occasion based on the period P, and SL PRS transmission may be performed only on slots corresponding to a bit value "1" within L_bitmap, repeated allocation of the SL PRS may be performed based on the slots corresponding to the bit value "1". That is, the aforementioned repeated allocation and transmission of the SL PRS may be performed only on slots available as SL resources based on L_bitmap. Also, the interval between slots to which the SL PRS is repeatedly allocated and transmitted may indicate an interval between slots (i.e., logically indicated slots) that are acquired by separately collecting slots corresponding to the bit value "1" in applying L _bitmap A times.

As another example, when the SL PRS is repeatedly transmitted based on 2, 4, 8, 16, or 32 within one occasion in relation to the option 2 muting bitmap as the aforementioned SL PRS-related muting bitmap, the option 2 muting bitmap may be configured as a 2, 4, 8, 16, or 32-bit bitmap. Here, also, the option 2 muting bitmap may be applied based on slots (i.e., logically indicated slots) that are acquired by separately collecting slots corresponding to the bit value of "1", and is not limited to a specific embodiment.

Also, for example, the UE may select a specific resource from among remaining resources excluding a resource occupied and used by another UE among resources belonging to the SL resource pool. Here, for example, as described above, time and frequency resources corresponding to SL PRS transmission slots may be excluded from a sensing stage. That is, when the UE excludes the resource occupied and used by the other UE from among resources belonging to the SL resource pool, the UE may exclude time and frequency resources corresponding to the aforementioned SL PRS transmission slots from the sensing stage. For example, Table 16 below may be an operation of the UE that senses resources for sidelink communication, excludes unavailable resources, and selects a resource, but may not be limited thereto. Referring to Table 16, Rx,y denotes a candidate single-slot resource (candidate single-subframe resource), and $S_A$ denotes a set of all possible candidate single-slot resources. Here, the UE may exclude the resource occupied by the other UE based on the aforementioned sensing, which may be as shown in "5)" below. For example, the UE may exclude a resource used for the UE to perform transmission from a sensing process. Also, the UE may exclude reserved resources from the sensing process based on higher layer configuration or SCI. Here, for example, the UE may exclude the time and frequency resources corresponding to the aforementioned SL PRS transmission slots from the sensing process. That is, the UE may consider SL PRS transmission slots in the process of selecting sidelink resources based on an operation of sensing resources for sidelink communication and excluding unavailable resources.

[Table 16]

| |
|---|
| A candidate single-slot resource for transmission $R_{x,y}$ is defined as a set of $L_{subCH}$ contiguous sub-channels with sub-channel $x+j$ in slot $t'^{SL}_y$ where $j = 0, \ldots, L_{subCH}$ - 1. <br> The UE shall assume that any set of $L_{subCH}$ contiguous sub-channels included in the corresponding resource pool within the time interval $[n + T_1, n + T_2]$ correspond to one candidate single-slot resource, where |

(continued)

selection of $T_1$ is up to UE implementation under $0 \leq T_1 \leq T_{proc,1}^{SL}$ , where $T_{proc,1}^{SL}$ is defined in slots in Table 8.1.4-2 where $\mu_{SL}$ is the SCS configuration of the SL BWP;

if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T_{proc,0}^{SL})$ where $T_0$ is defined above and $T_{proc,0}^{SL}$ is defined in slots in Table 8.1.4-1 where $\mu_{SL}$ is the SCS

configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the $i$-th field in *sl-Thres-RSRP-List,* where $i = p_i + (p_j - 1) * 8$.

4) The set $S_A$ is initialized to the set of all the candidate single-slot resources.

**5) The UE shall exclude any candidate single-slot resource $R_{x,y}$ from the set $S_A$ if it meets all the following conditions:**

**the UE has not monitored slot $t_m^{SL}$ in Step 2.**

**for any periodicity value allowed by the higher layer parameter *sl-ResourceReservePeriodList* and a hypothetical SCI format 1-A received in slot $t_m^{SL}$ with '*Resource reservation period*' field set to that periodicity value and indicating all subchannels of the resource pool in this slot, condition c in step 6 would be met.**

**5a) If the number of candidate single-slot resources $R_{x,y}$ remaining in the set $S_A$ is smaller than $X \cdot M_{total}$, the set $S_A$ is initialized to the set of all the candidate single-slot resources as in step 4.**

6) The UE shall exclude any candidate single-slot resource $R_{x,y}$ from the set $S_A$ if it meets all the following conditions:

the UE receives an SCI format 1-A in slot $t_m^{SL}$ , and '*Resource reservation period*' field, if present, and '*Priority*' field in the received SCI format 1-A indicate the values $P_{rsvp\_RX}$ and $prio_{RX}$, respectively according to Clause 16.4 in [6, TS 38.213];

the RSRP measurement performed, according to clause 8.4.2.1 for the received SCI format 1-A, is higher than $Th(prio_{RX}, prio_{TX})$;

the SCI format received in slot $t_m^{SL}$ or the same SCI format which, if and only if the '*Resource reservation period*' field is present in the received SCI format 1-A, is assumed to be received in slot (s) $t_{m+q \times P'_{rsvp\_RX}}^{SL}$ determines according to clause 8.1.5 the set of resource blocks and slots which overlaps with $R_{x,y+j \times P'_{rsvp\_TX}}$ for $q=1$, 2, ..., $Q$ and $j=0, 1, ..., C_{resel} - 1$. Here, $P'_{rsvp\_RX}$ is $P_{rsvp\_RX}$ converted to units of logical slots according to clause 8.1.7, $Q = \left\lceil \frac{T_{scal}}{P'_{rsvp\_RX}} \right\rceil$ if $P_{rsvp\_RX} < T_{scal}$ and $n' - m \leq P'_{rsvp\_RX}$ , where $t_{n'}^{SL} = n$ if slot $n$ belongs to the set $\left( t_0^{SL}, t_1^{SL}, ..., t_{T'_{max}-1}^{SL} \right)$, otherwise slot $t_{n'}^{SL}$ is the first slot after slot $n$ belonging to the set $\left( t_0^{SL}, t_1^{SL}, ..., t_{T'_{max}-1}^{SL} \right)$ ; otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

(continued)

| If a resource $r_i$ from the set $(r_0, r_1, r_2, ...)$ is not a member of $S_A$, then the UE shall report re-evaluation of the resource $r_i$ to higher layers. |
| --- |
| If a resource $r_i'$ from the set $(r_0', r_1', r_2', ...)$ meets the conditions below then the UE shall report pre-emption of the resource $r_i'$ to higher layers $r_i'$ is not a member of $S_A$, and $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and the associated priority $prio_{RX}$, satisfies one of the following conditions: <br> sl-PreemptionEnable is provided and is equal to 'enabled' and $prio_{TX} > prio_{RX}$ <br> - sl-PreemptionEnable is provided and is not equal to 'enabled', and $prio_{RX} < prio_{pre}$ and $prio_{TX} > prio_{RX}$ |

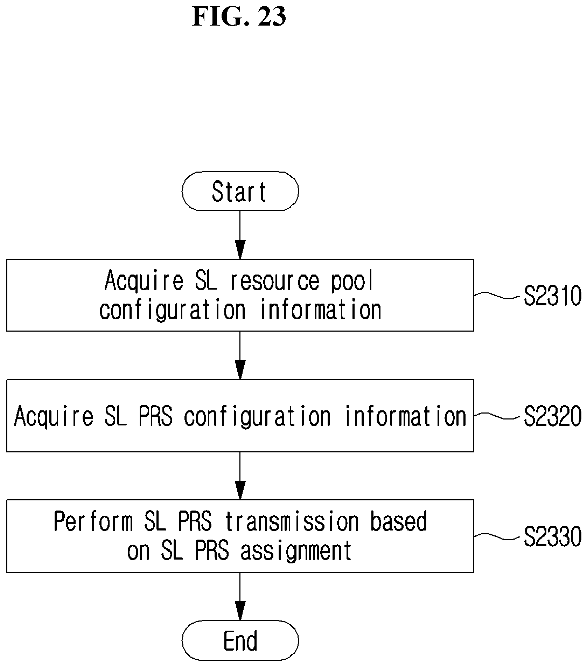

FIG. 23 is a flowchart illustrating a method of determining an SL PRS allocation period based on a sidelink slot set bitmap of a sidelink resource pool to which the present disclosure may apply. Referring to FIG. 23, the UE may acquire SL resource pool configuration information (S2310). Here, resources of an SL resource pool may be configured based on time resources of a slot set unit and frequency resources of a consecutive subchannel set unit. As time resources for SL resource pool configuration, at least one of an SL resource pool time period, a sidelink slot set within a single SL resource pool application duration (sl-TimeResource (length = L_bitmap)), the first symbol for a set of consecutive symbols within a single slot, and the number of consecutive symbols may be configured, which is described above. Also, for example, the UE may acquire SL PRS configuration information (S2320), and may perform SL PRS transmission based on SL PRS assignment (S2330). Here, SL PRS configuration may include an SL PRS transmission schedule and may be configured to the UE. Therefore, the UE may verify an SL PRS based on the indicated SL PRS configuration without performing blind detection. Numerologies for the SL PRS may be the same as numerologies for sidelink data transmission. For example, a CP length and a subcarrier spacing (SCS) for the SL PRS may be the same as a CP length and an SCS for sidelink data transmission.

For example, an SL PRS resource set may be configured to a single UE for SL PRS allocation for sidelink positioning based on SL PRS configuration. Here, the SL PRS resource set may be a set of SL PRS resources. Each SL PRS resource within the SL PRS resource set may have each corresponding SL PRS resource ID. Also, the SL PRS period may be configured for each SL PRS resource set, and all SL PRS allocation within the corresponding SL PRS resource set may have the same period. Also, for example, a plurality of SL PRS resource sets may be configured to a single UE.

Here, SL PRS allocation may be performed by considering a sidelink slot set within SL resource pool application duration (sl-TimeResource (length = L_bitmap)) based on SL resource pool configuration information. The sidelink communication may be performed only in available slots indicated by the sidelink slot set (sl-TimeResource (length = L_bitmap)), so the SL PRS may be assigned in consideration of the sidelink slot set (sl-TimeResource (length = L_bitmap)). For example, since the UE recognizes the sidelink slot set (sl-TimeResource (length = L_bitmap)) based on SL resource pool configuration information, the UE may acquire only information on the aforementioned A value and may determine the SL PRS assignment period, but may not be limited thereto.

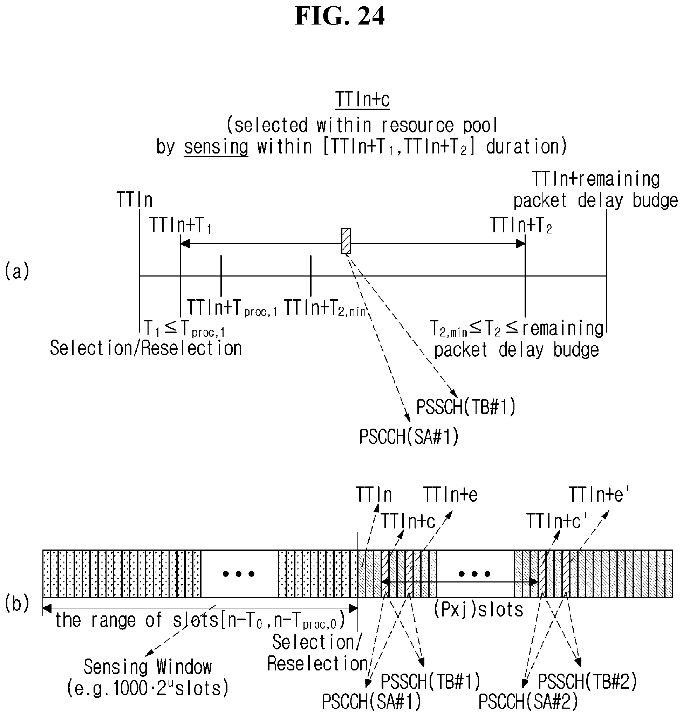

FIG. 24 illustrates the entire sensing-based resource selection and resource pool configuration to which the present disclosure may apply. Referring to FIG. 24, sensing for slots that belong to the range $[n-T_0, n-T_{proc,0})$ may proceed. Here, a square bracket "[" is a closed interval and represents that $n-T_0$ is included, and a parenthesis ")" is an open interval and represents that $n-T_{proc,0}$ is not included. Here, $T_0$ and $n-T_{proc,0}$ may be as shown in Table 17 below. For example, as described above, if $a=T_0=1000\cdot 2^u$ (slots) and $b=T_{proc,0}=1$, the UE may perform sensing on a sensing window corresponding to $1000\cdot 2^u$ slots. Through this, the UE may verify a resource occupied and used by another UE. The UE may select a specific resource from among remaining resources excluding the resource occupied and used by the other UE from among resources that belong to the resource pool.

[Table 17]

| - | Specific parameter value | Possible actual value (example) | Possible indication method |
| --- | --- | --- | --- |
| a | $a=T_0$ | $T_0=1000\cdot 2^u$ (slots) | (pre-)configured |
| b | $b=Tp_{roc,0}$ | $T_{proc,0}=1, 2, 3$ or $4$ (slots) | fixed |

(continued)

| - | Specific parameter value | Possible actual value (example) | Possible indication method |
|---|---|---|---|
| $T_1 \leq c \leq T_2$ | $T_1 \leq T_{proc,1}$ | $T_{proc,1}$=3, 5, 9 or 17 (slots) | fixed |
| | $T_2 \geq T_{2,min}$ | $T_{2,min}$=5·2$^u$, 10·2$^u$ or 20·2$^u$ (slots) | (pre-)configured |
| e-c | | 0 ~ 31 (slots) | indicated by SCI |
| c'-c | $P_{rsvp}$ | 0, 1, 2, ..., 99, 100, 200, 300, ..., 1000 (ms) | (pre-)configured + indicated by SCI |

For example, referring to (b) of FIG. 24, the UE may select TTI n+c, TTI n+e, TTI n+c', and TTI n+e', and may perform transmission of a control channel and a data channel on the selected resource. Here, TTI n+c and TTI n+c' may have a difference corresponding to $P_{reserve}$*j TTIs. For example, when a single TTI represents a single slot that is the aforementioned bitmap application target, the TTI may be $P_{reserve}$*j slots. Also, similarly, TTI n+e and TTI n+e' may have a difference corresponding to $P_{reserve}$*j TTIs (or P*j slots). Here, for example, $P_{reserve}$ may denote a resource reservation interval.

In detail, for example, a value of $P_{reserve}$ may be determined by higher layer signaling. Here, a value of $P_{reserve}$ may be one of values corresponding to 0, 1, 2, ..., 99, 100, 200, 300, ..., 1000 ms. For example, a value of $P_{reserve}$ may be indicated as $P_{rsvp\_TX}$ at a Tx UE, and a value of *Preserve* may be indicated as $P_{rsvp\_RX}$ at an Rx UE. Here, $P_{rsvp\_TX}$ and $P_{rsvp\_RX}$ may be values in unit of ms. If the aforementioned $P_{rsvp\_TX}$ and $P_{rsvp\_RX}$ are converted to slot-wise logical values, they may be indicated as $P'_{rsvp\_TX}$ and $P'_{rsvp\_RX}$, respectively.

Here, j may be one of values that are selected through carrier-specific (or band specific) network configuration or pre-configuration used for V2X within the range [0, 1, ..., 10]. Here, j may be selected and indicated through a "Resource reservation" signaling field of SCI included in SA, but is not limited to the aforementioned example. Here, j=0 may represent that a value of c' is absent. That is, it may represent not reserving resources after TTI corresponding to "P*j" from "TTI n+c" for transmission of TB#2 (second TB).

Here, referring to (a) of FIG. 24, in the case of performing full sensing, an "TTI n+c" section may be selected by sensing from the resource bool that belongs to [TTI n+$T_1$, TTI n+$T_2$].

Here, n≤n+$T_1$≤n+$T_{proc,1}$. Also, n+$T_{2,min}$≤n+$T_2$≤n+(remaining packet delay budget). That is, values of $T_1$ and $T_2$ may be determined as $T_1 \leq T_{proc,1}$ and $T_{2,min} \leq T_2 \leq$(remaining packet delay budget).

For example, if u=0 (i.e., if SCS = 15 kHz), it may be fixed as a value corresponding to $T_{proc,1}$=3 slots. Meanwhile, if u=1, 2, and 3 (i.e., if SCS = 30 kHz, 60 kHz, and 120 kHz), $T_{proc,1}$ may be fixed to values corresponding to 5, 9, and 17, respectively. Also, $T_{2,min}$ may be (pre)-configured as a value corresponding to 5·2$^u$, 10·2$^u$, or 20·2$^u$ slots.

Here, for example, $P_{reserve}$ may be selected as one value among 0, 1, 2, ..., 99, 100, 200, 300, ..., 1000 ms as sl-ResourceReservePeriodList. As another example, the UE may configure periodicSensingOccasionResevePeriodList based on higher layer signaling, and may select $P_{reserve}$ from periodicSensingOccasionResevePeriodList. Here, periodicSensingOccasionResevePeriodList may be selected up to 16 as subsets of sl-ResourceReservePeriodList.

In detail, for example, SL PBPS CPS config may be configured to the UE based on a higher layer parameter. Here, a subset in sl-ResourceReservePeriodList for determining a periodic sensing occasion may be indicated based on sl-PBPS-OccasionReservePeriodiList parameter of SL PBPS CPS config, and one of period values within the subset may be used. For example, when sl-PBPS-OccasionReservePeriodiList is not configured, the UE may use one of all period values of sl-ResourceReservePeriodList.

Here, for example, period P for SL PRS allocation may be determined as shown in Equation 13 below in consideration of $P_{reserve}$. In detail, the period P for SL PRS allocation may be determined in consideration for reserved resources for sidelink communication based on FIG. 24. Here, A may be an integer from 1 to M (e.g., 128, 256). As another example, A may be set to a value of $2^n$. That is, A may be set to 1, 2, 4, 8, 16... $2^n$. For example, A may be $2^n$=128, 256, but is not limited to a specific embodiment.

[Equation 13]

$$P = A * P_{reserve}$$

Here, when a value of P is determined as shown in Equation 13 above, the period P may not be repeated in muting bitmap unit (2/4/8/16/32) in the entire duration, and a section not indicated by the muting bitmap may be present. Equation 14 below may be considered to apply a bitmap for option 1 by considering the above. In Equation 14, C denotes the number of occasions. Here, the occasion may correspond to one period P. Also, k denotes a bitmap unit. For example, k bitmap may be repeated to the range in which k*A*$P_{reserve}$ does not exceed 20480 ms. Then, the last one may apply only bit values up to just before 20480 ms in the length k bitmap and may apply the same in order of bits corresponding to LSB.

Here, based on Equation 14, the number of occasions may be C, and the bitmap may be repeatedly applied as is int(C/k) times. int(x) denotes an integer value of x value. Then, bits corresponding to LSB in the bitmap may be sequentially applied to C- k· int(C/k) as occasions that remain after repeatedly transmitting the bitmap. Through the above, resources to be muted may be indicated even when the period P and the bitmap unit are not divided

[Equation 14]

$$C=(20480\text{ms})/(A\cdot P_{reserve})$$

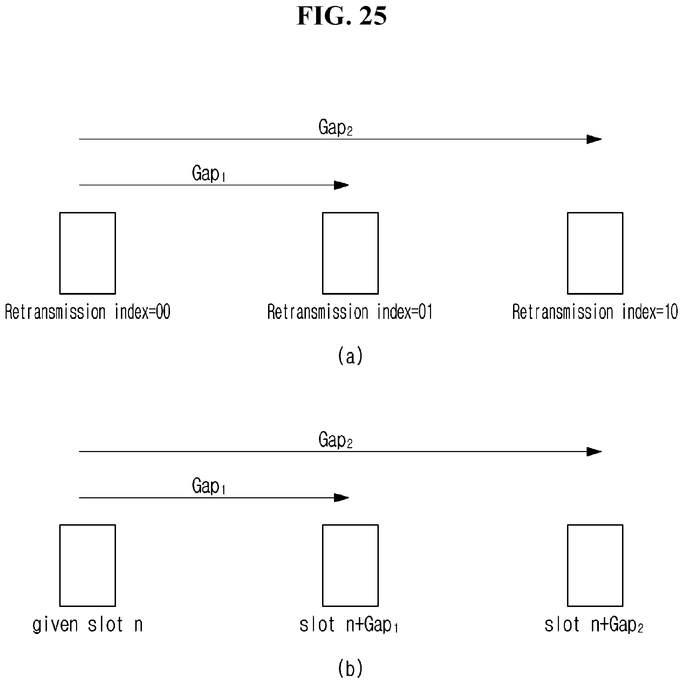

FIG. 25 illustrates a method of performing repeated transmission based on period $P_{reserve}$ applicable to the present disclosure.

For example, referring to FIG. 25, 1, 2, or 3 SL PRS repeated transmissions may be performed in *Preserve* based on $N_{max}$ within one occasion with P=A*$P_{reserve}$ based on Equation 13. For example, if $N_{max}$ = 1, one SL PRS transmission may be performed in *Preserve* within one occasion. If $N_{max}$ = 2, two SL PRS transmissions may be performed in *Preserve* within one occasion. Also, if $N_{max}$ = 3, three SL PRS transmissions may be performed in $P_{reserve}$ within one occasion. For example, a field indicating a time interval between an initial transmission and a retransmission, "Time gap between initial transmission and retransmission" field, may be set to 5 bits if $N_{max}$ = 2, and may also be set to 9 bits if $N_{max}$ = 3. Also, a "Retransmission index" field indicating a retransmission status may be set to 1 bit if $N_{max}$ = 2, and may be set to 2 bits if $N_{max}$ = 3.

In detail, referring to FIG. 25, as a case of $N_{max}$ = 2 , when $Gap_1$ that is a time interval between an initial transmission and a retransmission is 0, a 5-bit "Time gap between initial transmission and retransmission" field value may be set to "00000". If the time interval, $Gap_1$, is 1, 2, 3, ..... 31, the above field values may be "00001", "00010", "00011" .... "11111", respectively. Here, when the 1-bit "Retransmission index" field may indicate the initial transmission of an SL PRS in the case of a first value (e.g., 0), and may indicate the retransmission of the SL PRS in the case of a second value (e.g., 1).

As a case of $N_{max}$ = 3, a case in which a time interval between an initial transmission and a second transmission is $Gap_1$, and a time interval between the second transmission and a third transmission is $Gap_2$ may be considered. Here, if both $Gap_1$ and $Gap_2$ are 0, a 9-bit "Time gap between initial transmission and retransmission" field value may be set to "000000000". If $Gap_1$ = 1, 2, 3, ..... 31, and $Gap_2$ = 0, the above field values may be "000000001", "000000010", ...," 000011111", respectively.

As another example, when $Gap_1<Gap_2$, and $Gap_1$ and $Gap_2$ are selected as any two of {1, 2, ..., 31}, the above field may be set to "000100000", "000100001", ..., "111110000 based on 456 cases. Also, a 2-bit "Retransmission index" field may indicate the initial transmission of the SL PRS in the case of "00", may indicate the second transmission of the SL PRS in the case of "01", and may indicate the third transmission of the SL PRS in the case of "10".

Here, for example, $P_{reserve}$ may be applied repeatedly A times in one occasion based on the period P, and repeated transmission may be performed based on $N_{max}$ within *Preserve.* Therefore, the SL PRS may be repeatedly transmitted in up to $N_{max}$ slots per $P_{reserve}$ within one occasion, and an interval between SL PRS slots repeatedly allocated and transmitted may be determined based on the "Time gap between initial transmission and retransmission" field value. Based on the above, the number of SL PRS repetitions in one occasion may be configured as 1, 2, or 3, and is not limited to a specific embodiment.

As another example, in relation to the option 2 muting bitmap as the aforementioned SL PRS-related muting bitmap, the SL PRS may be repeatedly transmitted in up to $N_{max}$ slots per $P_{reserve}$ within one occasion, and the option 2 muting bitmap corresponding to $N_{max}$ may be set. For example, if $N_{max}$ = 1, the option 2 muting bitmap may be set to once, if $N_{max}$ = 2, the option 2 muting bitmap may be set to once or twice, and if $N_{max}$ = 3, the option 2 muting bitmap may be set to once, twice, or three times. Therefore, the corresponding bitmap length may be 2 or 3, but may not be limited thereto.

Also, for example, the UE may select a specific resource from among remaining resources excluding a resource occupied and used by another UE from among resources that belong to the SL resource pool. However, $P_{reserve}$-based SL PRS resources may be resources after sensing, so may not be excluded from the sensing stage.

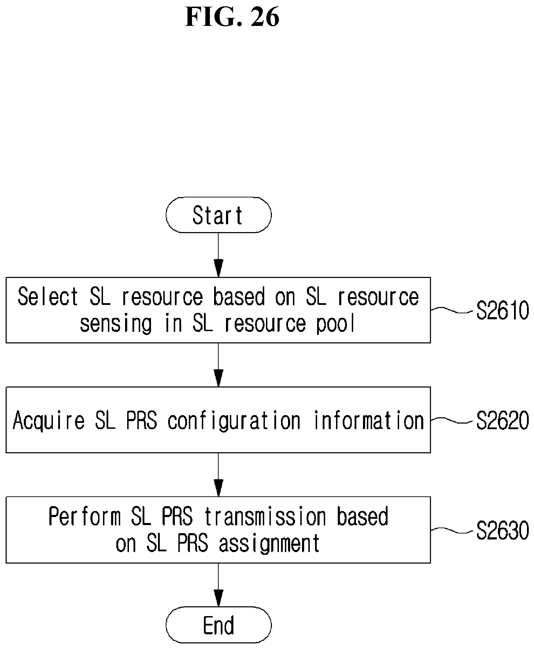

FIG. 26 is a flowchart illustrating a method of determining an SL PRS allocation period based on SL resources selected through SL resource sensing from a sidelink resource pool to which the present disclosure may apply. Referring to FIG. 26, the UE may exclude unavailable resources by performing SL resource sensing in the SL resource pool and may perform an SL resource selection operation, which may be as shown in FIG. 24 (S2610). Here, a selected resource may be repeated based on $P_{reserve}$. Also, for example, the UE may acquire SL PRS configuration information (S2620), and may perform SL PRS transmission based on SL PRS allocation (S2630). Here, SL PRS configuration may include an SL PRS transmission schedule, and may be configured to the UE. Therefore, the UE may verify an SL PRS based on the indicated SL PRS configuration without performing blind detection. Numerologies for the SL PRS may be the same as numerologies for sidelink data transmission. For example, a CP length and a subcarrier spacing (SCS) for the SL PRS may be the same as a CP length and an SCS for sidelink data transmission.

For example, an SL PRS resource set may be configured to a single UE for SL PRS allocation for sidelink positioning based on SL PRS configuration. Here, the SL PRS resource set may be a set of SL PRS resources. Each of SL PRS resources within the SL PRS resource set may have each corresponding SL PRS resource ID. Also, an SL PRS period may be configured for each SL PRS resource set, and all SL PRS allocation within the corresponding SL PRS resource set may have the same period. Also, for example, a plurality of SL PRS resource sets may be configured to a single UE.

Here, the SL PRS allocation may be performed in consideration of the period $P_{reserve}$ of SL resources selected through SL resource sensing within the SL resource pool. That is, since $P_{reserve}$ may be a period for SL resources selected for SL transmission and the SL PRS may be transmitted using corresponding resources, the SL PRS allocation period may also be determined based on $P_{reserve}$, which is described above.

As another example, SL PRS resources may be configured based on an SSB. For example, the UE may acquire SSB configuration information through higher layer signaling. For example, SSB periodicity may be set to 5, 10, 20, 40, 80 and 160 ms based on SSB configuration information, but may not be limited thereto. For example, the maximum number of SSBs available in 3 GHz to 6 GHz may be 8, and the maximum number of SSBs available in 6GHz or more may be 64. For example, up to 64 SSBs may be transmitted based on 8-bit indication information (e.g., groupPresence) indicating presence or absence of eight groups and 8-bit indication information (e.g., inOneGroup) indicating presence or absence of eight SSB transmission within a group. That is, the UE may receive an SSB based on the aforementioned information configured through higher layer signaling. In detail, for example, when the 8-bit indication information (e.g., group-Presence) is (1 0 0 0 0 0 0 1), and is configured as 8-bit indication information (e.g., inOneGroup), indexes of SBSs actually transmitted among up to 64 SSBs may be numbers 0, 1, 56, and 57. Here, an SSB burst set may be configured within 5 ms and may be repeatedly transmitted based on the aforementioned period.

Here, for example, the period P for SL PRS assignment may be determined based on Equation 15 below. That is, the period may be determined based on $SSB_{priodicity}$. Here, A may be an integer from 1 to M. Since a maximum SSB periodicity value is 160 ms, M may be maximum 128. As another example, A may be set to a value of $2^n$. That is, A may be set to 1, 2, 4, 8, 16... $2^n$, and, in the above, a maximum value of A may be $2^n=128$. That is, the period P for SL PRS allocation may be determined by considering $SSB_{priodicity}$ as the SSB periodicity value. In detail, for example, the SL PRS may be set based on the SSB periodicity value, and may be transmitted through a resource to which the SSB is not transmitted. For example, the SL PRS may be transmitted from a group in which an SSB transmission group is absent based on the 8-bit indication information (e.g., groupPresence) indicating presence or absence of eight SSB transmission groups. Here, 8-bit separate indication information indicating presence or absence of an SL PRS transmission group for SL PRS assignment and 8-bit separate indication information indicating presence or absence of eight SL PRS transmission within a group may be configured to the UE through higher layer signaling, but may not be limited to the corresponding example.

In detail, a PRS occasion or consecutive instances may correspond to one period P in Equation 15 below. An SL PRS may be repeated in one occasion, and since up to 64 SSBs are present within one SSB periodicity, up to A·64 SSBs may be present in one occasion. Here, remaining slots excluding slots to which the SSB is actually allocated from among 64 SSBs (i.e., slots corresponding to a bit value of "1" in both a groupPresence bitmap and an inOneGroup bitmap) may be used for SL PRS transmission. Therefore, there is a need to indicate whether to perform SL PRS transmission for the remaining slots. To this end, 8-bit separate indication information corresponding to groupPresence and indicating presence or absence of an SL PRS transmission group for indicating presence or absence of SL PRS transmission may be configured. Also, 8-bit separate indication information corresponding to inOneGroup and indicating presence or absence of eight SL PRS transmission within a group may be configured. Here, the aforementioned bitmaps may indicate "1" or "0" only for remaining bits excluding slots to which an SSB is transmitted (i.e., slots corresponding to a bit value of "1" in both the groupPresence bitmap and the inOneGroup bitmap). For example, a bit value of a bitmap for SL PRS corresponding to a bit value "1" in both the groupPresence bitmap and the inOneGroup bitmap based on SSB transmission may be 0 at all times.

$$[\text{Equation 15}]$$

$$P = A \cdot SSB_{priodicity}$$

Also, for example, an SL PRS muting bitmap may be configured in an SL PRS resource set. In detail, when an SL PRS to be muted is indicated to the UE, the UE may mute the corresponding SL PRS. Here, the SL PRS muting bitmap for the SL PRS resource set may be configured and, based thereon, the SL PRS to be muted may be indicated to the UE. Here, the SL PRS muting bitmap may consider the aforementioned option 1 bitmap and option 2 bitmap. In detail, each bit of the option 1 bitmap may correspond to each occasion or consecutive instances within the SL PRS resource set. Here, when a specific bit indicates muting, all SL PRSs within an occasion or consecutive instances corresponding to a specific bit may be muted.

Also, the option 2 bitmap may indicate muting for each SL PRS resource within an occasion or instances for one period. Each bit of the bitmap may correspond to a repetition index of each SL PRS resource within the occasion or instances for one period. That is, each bit may correspond to one repetition of an SL PRS within each one SL PRS period, and muting may be indicated by each bit. Here, the bitmap may be set to one of 2, 4, 8, 16, and 32 bits. For example, the aforementioned PRS occasion or consecutive instances may correspond to one period P of the aforementioned Equation 15. When a value of P is determined as shown in the aforementioned Equation 15, the period P is a value that considers $SSB_{priodicity}$ in the entire duration and thus, may be repeated based on a bitmap unit, unit of 2, 4, 8, 16, or 32.

As another example, in the case of SL PRS transmission, A $SSB_{priodicity}$ may be present in one occasion based on the period P. Here, as the SL PRS-related muting bitmap, the option 2 muting bitmap may determine to mute A to the bitmap. That is, the muting unit of the option 2 muting bitmap may be the SSB periodicity unit, and based thereon, muting may be indicated.

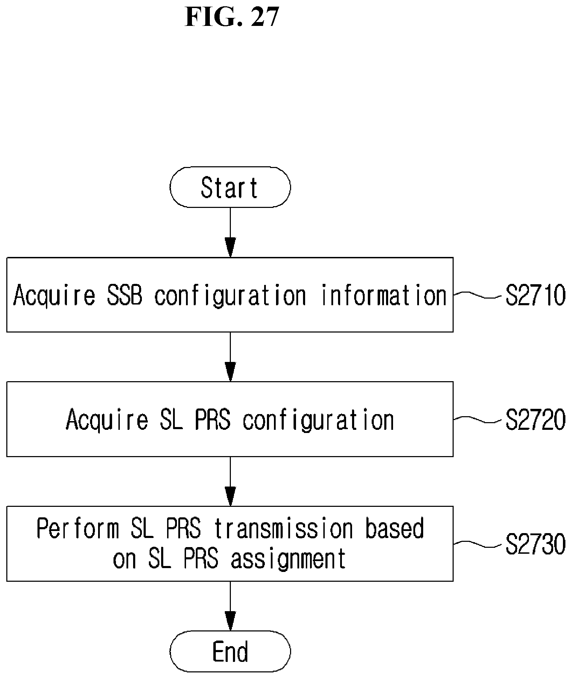

FIG. 27 is a flowchart illustrating a method of determining an SL PRS allocation period based on an SSB to which the present disclosure may apply. Referring to FIG. 27, the UE may acquire SSB configuration information (S2710). Here, SSB periodicity may be set to 5, 10, 20, 40, 80 and 160 ms based on SSB configuration information, but may not be limited thereto. For example, the maximum number of SSBs available in 3 GHz to 6 GHz may be 8, and the maximum number of SSBs available in 6 GHz or more may be 64. For example, up to 64 SSBs may be transmitted based on 8-bit indication information (e.g., groupPresence) indicating presence or absence of eight groups and 8-bit indication information (e.g., inOneGroup) indicating preof sence or absence eight SSB transmission within a group. That is, the UE may receive an SSB based on the aforementioned information configured through higher layer signaling. Here, for example, the period P for SL PRS allocation may be determined based on the aforementioned Equation 15. That is, the period may be determined based $SSB_{priodicity}$. For example, the UE may acquire SL PRS configuration information (S2720), and may perform SL PRS transmission based on SL PRS assignment (S2730). Here, the SL PRS configuration may include an SL PRS transmission schedule, and may be configured to the UE. Therefore, the UE may verify an SL PRS based on the indicated SL PRS configuration without performing blind detection. Numerologies for the SL PRS may be the same as numerologies for sidelink data transmission. For example, a CP length and a subcarrier spacing (SCS) for the SL PRS may be the same as a CP length and an SCS for sidelink data transmission.

For example, an SL PRS resource set may be configured to a single UE for SL PRS allocation for sidelink positioning based on SL PRS configuration. Here, the SL PRS resource set may be a set of SL PRS resources. Each of SL PRS resources within the SL PRS resource set may have each corresponding SL PRS resource ID. Also, an SL PRS period may be configured for each SL PRS resource set, and SL PRS allocation within the corresponding SL PRS resource set may have the same period. Also, for example, a plurality of SL PRS resource sets may be configured to a single UE.

Here, SL PRS allocation may be performed in consideration of $SSB_{priodicity}$ based on SSB configuration information. For example, as described above, $SSB_{priodicity}$ refers to SSB transmission periodicity, and an SL PRS may be transmitted at $SSB_{priodicity}$ through a resource to which an SSB is not assigned.

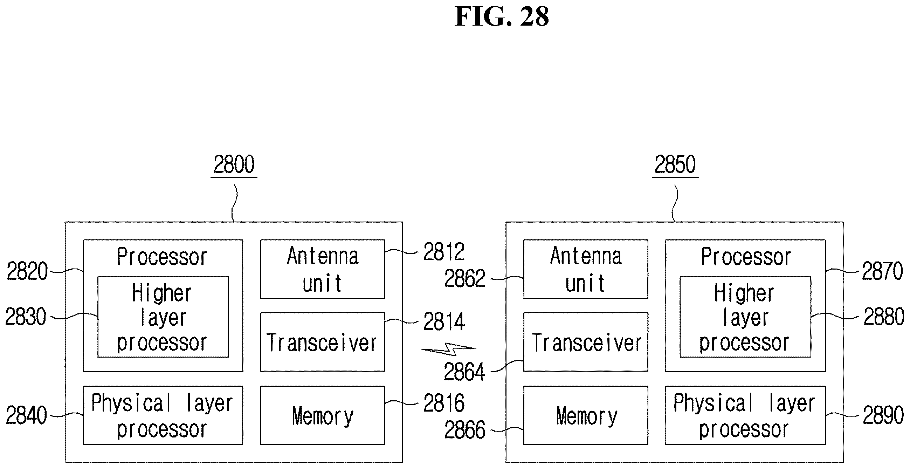

FIG. 28 is a diagram illustrating a configuration of a base station device and a terminal device according to the present disclosure may apply.

A base station device 2800 may include a processor 2820, an antenna device 2812, a transceiver 2814, and a memory 2816.

The processor 2820 may perform baseband-related signal processing and may include an upper layer processing unit 2830 and a physical (PHY) layer processing unit 2840. The upper layer processing unit 2830 may process an operation of a MAC layer, an RRC layer, or more upper layers. The PHY layer processing unit 2840 may process an operation (e.g., uplink received signal processing, downlink transmission signal processing, etc.) of a PHY layer. The processor 2820 may also control the overall operation of the base station device 2800, in addition to performing the baseband-related signal processing.

The antenna device 2812 may include at least one physical antenna. If the antenna device 2812 includes a plurality of antennas, multiple input multiple output (MIMO) transmission and reception may be supported. The transceiver 2814 may include a radio frequency (RF) transmitter and an RF receiver. The memory 2816 may store operation-processed information of the processor 2820, software, an operating system (OS), an application, etc., associated with an operation of the base station device 2800, and may include a component, such as a buffer.

The processor 2820 of the base station device 2800 may be configured to implement an operation of a base station in the embodiments set forth herein.

The terminal device 2850 may include a processor 2870, an antenna device 2862, a transceiver 2864, and a memory 2866. For example, the terminal device 2850 may communicate with the base station device 2800. As another example, the terminal device 2850 may perform sidelink communication with another terminal device. That is, the terminal device 2850 of the present invention refers to any device capable of communicating with at least one of the base station device 2800 and another terminal device and is not limited to communication with a specific device.

The processor 2870 may perform baseband-related signal processing and may include an upper layer processing unit 2880 and a PHY layer processing unit 2890. The upper layer processing unit 2880 may process an operation of a MAC layer, an RRC layer, or more upper layers. The PHY layer processing unit 2890 may process an operation (e.g., downlink received signal processing, uplink transmission signal processing, etc.) of a PHY layer. The processor 2870 may also control the overall operation of the terminal device 2850 in addition to performing the baseband-related signal processing.

The antenna device 2862 may include at least one physical antenna. If the antenna device 2862 includes a plurality of antennas, MIMO transmission and reception may be supported. The transceiver 2864 may include an RF transmitter and an RF receiver. The memory 2866 may store operation-processed information of the processor 2870, software, an OS, an application, etc., associated with an operation of the terminal device 2850, and may include a component, such as a buffer. For example, the operations of FIGS. 1 to 19 described above may be performed based on the base station 2800 and the terminal device 2850, and may not be limited to a specific example.

The various examples herein are to explain the representative aspects of the present disclosure instead of describing all the possible combinations and matters described in the various examples may independently apply or may apply through at least two combinations thereof.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present invention includes a software or machine executable instructions (for example, operating system, application, firmware, program, etc.) for enabling to implement operations according to the methods of the various embodiments, and a device or a non-transitory computer-readable medium executable on a computer storing such a software or instructions.

INDUSTRIAL APPLICABILITY

The following matters may apply to other systems.

**Claims**

1. A method of performing sidelink positioning in a wireless communication system, the method comprising:

    acquiring sidelink (SL) resource pool configuration information;
    acquiring sidelink positioning reference signal (SL PRS) configuration information; and
    transmitting an SL PRS based on SL PRS allocation.

2. A method of performing sidelink positioning in a wireless communication system, the method comprising:

    selecting a sidelink (SL) resource based on SL resource sensing from a sidelink (SL) resource pool;
    acquiring sidelink positioning reference signal (SL PRS) configuration information; and
    transmitting an SL PRS based on SL PRS allocation.

3. A method of performing sidelink positioning in a wireless communication system, the method comprising:

    acquiring synchronization signal block (SSB) configuration information;
    acquiring sidelink positioning reference signal (SL PRS) configuration information; and
    transmitting an SL PRS based on SL PRS allocation.

# FIG. 1

(a)V2V OPERATION

(b)V2I OPERATION

(c)V2P OPERATION

# FIG. 2

(a)V2V OPERATION

(b)V2I OPERATION

(c)V2P OPERATION

# FIG. 3

(a)

(b)

# FIG. 4

EP 4 586 708 A1

# FIG. 5

| Downlink frame $i$ |
|---|

| Uplink frame $i$ |
|---|

$N_{TA} T_{s}$

# FIG. 6

One sub frame

$N_{\text{sub frame}}^{\text{symbols}\,\mu}$ OFDM symbols

$k = N_{RB}^{\mu}\, N_{sc}^{RB}\, \text{-}1$

Resource block

Resource element
$-(k,\bar{l})$ in resource grid
$-(k,l)$ in resource block

$N_{RB}^{\mu}\, N_{sc}^{RB}$ subcarriers

$N_{sc}^{RB}$ subcarriers

$k = 0$

$l = 0$

$\bar{l} = 14 \cdot 2^{\mu} \text{-} 1$

# FIG. 7

SFN(or DFN) period (10240ms)

V2X band

(a)

1 1 0 0 1 1 1 0 1 1 • • • 1 1 0 0 1

#0

Repetitions of
"slot indication of resource pool"

#(10240x2$^u$-1)

▨ Resource pool for V2X(only for time-domain)

SFN or DFN period (10240ms)

V2X band

#0                                              #(10240x2$^u$-1)

V2X band

$t^{SL}_0$              $t^{SL}_i$              $t^{SL}_{Tmax-1}$

(b)

+

Repetition of length $L_{bit-map}$ bit-map

$L_{bit-map}$

$(b_0, b_1, \ldots, b_{Lbit-map}-1)$    $L_{bit-map}$

$(b_0, b_1, \ldots, b_{Lbit-map}-1)$

$L_{bit-map}$

$(b_0, b_1, \ldots, b_{Lbit-map}-1)$

V2X band

1 1 0 1 • • • 1 1 0 1 1 1 0 1 • • • 1 1 0 1

▨ Excepted slots within a SFN(or DFN) period
(Total d slots or d+d' slots)

▨ Resource pool for V2X(only for time-domain)

# FIG. 8

RB#(N$^{UL}_{RB}$−1)

V2X slot

V2X band

"Number of
sub-channels"

"Starting RB
of sub-channel"

"sub-channel size"

RB#0

PSCCH(SA) for V2X(only for frequency-comain)

PSSCH(Data) for V2X(only for frequency-comain)

# FIG. 9

**FIG. 10**

# FIG. 11

# FIG. 12

# FIG. 13

EP 4 586 708 A1

# FIG. 14

1410
Base station

1420
UE A

1430
UE B

1440
UE C

1450
UE D

Request information

Request information

Allocation information

Allocation information

Allocation information

Allocation information

Allocation information

SL SRS

SL SRS

SL SRS

Measurement information

Measurement information

Measurement information

EP 4 586 708 A1

# FIG. 15

# FIG. 16

# FIG. 17

Comb-2          Comb-4              Comb-6

FIG. 18

# FIG. 19

{0,6,3,9,1,7,4,10,2,8,5,11}pattern with $f_{shift}=0$

{0,6,3,9,1,7,4,10,2,8,5,11}pattern with $f_{shift}=2$

# FIG. 20

period:{4,8,16,32,64,5,10,20,40,80,160,320,640,1280,2560,5120,10240,20480}slots(e.g.,10 slots in avove figure)
offset:{0,1,...,period-1}slots(e.g.,2 slots in above figure)
DL-PRS-ResourceRepetitionFacto:{1,2,4,8,16,32}times(e.g.,2times in above figure)
DL-PRS-ResourceTimeGap:{1,2,4,8,16,32}slots(e.g.,1 slots in above figure)

(a)

Muting type#1:unit of each PRS occasions(PRS period),{2,4,8,16,32} bits
(e.g.,2-bit bitmap for 2 period in above figure)

Muting type#2:unit of each PRS reptition in a PRS period,{2,4,8,16,32} bits
(e.g.,2-bit bitmap for 2 repetitions in above figure)

(b)

EP 4 586 708 A1

# FIG. 21

# FIG. 22

sl-TimeResource(length = $L_{bitmap}$)
(e.g.,0011111100)

Frequency(RBs)

sl-RB-Number

sl-StartRBsubchannel →

Time(slots)

sl-SubchannelSize

$10240 \times 2^{\mu}$

Legend:
- SL BWP
- Excluded RB
- Reserved slot
- Excluded slot
- SSB slot

EP 4 586 708 A1

# FIG. 23

```
                    ┌──────────┐
                    │  Start   │
                    └────┬─────┘
                         │
                         ▼
        ┌────────────────────────────────────┐
        │       Acquire SL resource pool      │          S2310
        │       configuration information     │
        └──────────────────┬─────────────────┘
                           │
                           ▼
        ┌────────────────────────────────────┐
        │ Acquire SL PRS configuration information │      S2320
        └──────────────────┬─────────────────┘
                           │
                           ▼
        ┌────────────────────────────────────┐
        │    Perform SL PRS transmission based │         S2330
        │        on SL PRS assignment          │
        └──────────────────┬─────────────────┘
                           │
                           ▼
                    ┌──────────┐
                    │   End    │
                    └──────────┘
```

# FIG. 24

<u>TTln+c</u>
(selected within resource pool
by <u>sensing</u> within [TTln+T₁,TTln+T₂] duration)

(a)

$TTln+remaining$
$packet\ delay\ budge$

$TTln$

$TTln+T_1$

$TTln+T_2$

$TTln+T_{proc,1}$    $TTln+T_{2,min}$

$T_1 \leq T_{proc,1}$

Selection/Reselection

$T_{2,min} \leq T_2 \leq remaining$
$packet\ delay\ budge$

PSSCH(TB#1)

PSCCH(SA#1)

(b)

$TTln$    $TTln+e$    $TTln+e'$

$TTln+c$    $TTln+c'$

the range of slots[n−T₀,n−T_{proc,0})    (Pxj)slots

Selection/
Reselection

Sensing Window
(e.g.1000·2ᵘslots)

PSSCH(TB#1)    PSSCH(TB#2)

PSCCH(SA#1)    PSCCH(SA#2)

# FIG. 25

Gap$_2$

Gap$_1$

Retransmission index=00      Retransmission index=01      Retransmission index=10

(a)

Gap$_2$

Gap$_1$

given slot n      slot n+Gap$_1$      slot n+Gap$_2$

(b)

# FIG. 26

```
           ┌─────────────┐
           │    Start     │
           └──────┬──────┘
                  │
                  ▼
   ┌───────────────────────────────────┐
   │ Select SL resource based on SL    │──── S2610
   │  resource sensing in SL resource  │
   │  pool                             │
   └───────────────┬───────────────────┘
                   │
                   ▼
   ┌───────────────────────────────────┐
   │ Acquire SL PRS configuration      │──── S2620
   │  information                      │
   └───────────────┬───────────────────┘
                   │
                   ▼
   ┌───────────────────────────────────┐
   │ Perform SL PRS transmission based │──── S2630
   │  on SL PRS assignment             │
   └───────────────┬───────────────────┘
                   │
                   ▼
           ┌─────────────┐
           │     End      │
           └─────────────┘
```

# FIG. 27

```
        ┌─────────┐
        │  Start  │
        └─────────┘
             │
             ▼
┌─────────────────────────────────────────┐
│ Acquire SSB configuration information    │───── S2710
└─────────────────────────────────────────┘
             │
             ▼
┌─────────────────────────────────────────┐
│      Acquire SL PRS configuration        │───── S2720
└─────────────────────────────────────────┘
             │
             ▼
┌─────────────────────────────────────────┐
│ Perform SL PRS transmission based        │───── S2730
│        on SL PRS assignment              │
└─────────────────────────────────────────┘
             │
             ▼
        ┌─────────┐
        │   End   │
        └─────────┘
```

**FIG. 28**

## INTERNATIONAL SEARCH REPORT

| International application No. |
| --- |
| **PCT/KR2023/013485** |

| A. | CLASSIFICATION OF SUBJECT MATTER |
| --- | --- |

**H04W 64/00**(2009.01)i; **H04W 72/02**(2009.01)i; **H04W 24/08**(2009.01)i; **H04W 4/40**(2018.01)i; **H04L 5/00**(2006.01)i

According to International Patent Classification (IPC) or to both national classification and IPC

| B. | FIELDS SEARCHED |
| --- | --- |

Minimum documentation searched (classification system followed by classification symbols)

H04W 64/00(2009.01); G01S 5/02(2010.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 사이드링크 포지셔닝 참조 신호(sidelink positioning reference signal, SL PRS), 동기화 신호 블록(synchronization signal block, SSB), 할당(allocation), 구성(configuration), 센싱(sensing)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022-034485 A1 (LENOVO (SINGAPORE) PTE. LTD.) 17 February 2022 (2022-02-17) See paragraphs [0078], [0081], [0087], [0091] and [0093]. | 1 |
| Y | | 2-3 |
| Y | LG ELECTRONICS. Discussion on potential solutions for SL positioning. R1-2205855, 3GPP TSG RAN WG1 Meeting #110. 12 August 2022. See pages 11-12. | 2 |
| Y | KR 10-2022-0111683 A (QUALCOMM INCORPORATED) 09 August 2022 (2022-08-09) See paragraphs [0034] and [0053]; and claim 26. | 3 |
| A | MODERATOR (QUALCOMM). Moderator Summary #2 on potential solutions for SL positioning. R1-2207875, 3GPP TSG RAN WG1 #110. Toulouse, France. 28 August 2022. See section 5.2. | 1-3 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 December 2023** | **07 December 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/013485** |

### C. DOCUMENTS CONSIDERED TO BE RELEVANT

| Category* | Citation of document, with indication, where appropriate, of the relevant passages | Relevant to claim No. |
| --- | --- | --- |
| A | ZTE. Discussion on potential solutions for SL positioning. R1-2205901, 3GPP TSG RAN WG1 #110. Toulouse, France. 12 August 2022.<br>　　　See section 2.2.3. | 1-3 |

Form PCT/ISA/210 (second sheet) (July 2022)

## INTERNATIONAL SEARCH REPORT
### Information on patent family members

International application No.

**PCT/KR2023/013485**

| Patent document cited in search report | | | Publication date (day/month/year) | Patent family member(s) | | | Publication date (day/month/year) |
|---|---|---|---|---|---|---|---|
| WO | 2022-034485 | A1 | 17 February 2022 | AU | 2021-325422 | A1 | 09 March 2023 |
| | | | | AU | 2021-326057 | A1 | 09 March 2023 |
| | | | | BR | 112023002504 | A2 | 04 April 2023 |
| | | | | BR | 112023002513 | A2 | 04 April 2023 |
| | | | | CA | 3186407 | A1 | 17 February 2022 |
| | | | | CA | 3186670 | A1 | 17 February 2022 |
| | | | | CN | 116018867 | A | 25 April 2023 |
| | | | | CN | 116034285 | A | 28 April 2023 |
| | | | | CN | 116075738 | A | 05 May 2023 |
| | | | | EP | 4193166 | A2 | 14 June 2023 |
| | | | | EP | 4193167 | A2 | 14 June 2023 |
| | | | | EP | 4193731 | A1 | 14 June 2023 |
| | | | | JP | 2023-537985 | A | 06 September 2023 |
| | | | | KR | 10-2023-0048332 | A | 11 April 2023 |
| | | | | KR | 10-2023-0050334 | A | 14 April 2023 |
| | | | | US | 2023-0296752 | A1 | 21 September 2023 |
| | | | | US | 2023-0305099 | A1 | 28 September 2023 |
| | | | | US | 2023-0309066 | A1 | 28 September 2023 |
| | | | | WO | 2022-034483 | A2 | 17 February 2022 |
| | | | | WO | 2022-034483 | A3 | 21 April 2022 |
| | | | | WO | 2022-034484 | A2 | 17 February 2022 |
| | | | | WO | 2022-034484 | A3 | 05 May 2022 |
| KR | 10-2022-0111683 | A | 09 August 2022 | BR | 112022011296 | A2 | 06 September 2022 |
| | | | | CN | 114830755 | A | 29 July 2022 |
| | | | | EP | 4079059 | A1 | 26 October 2022 |
| | | | | JP | 2023-506040 | A | 14 February 2023 |
| | | | | TW | 202131709 | A | 16 August 2021 |
| | | | | US | 11496988 | B2 | 08 November 2022 |
| | | | | US | 2021-0185632 | A1 | 17 June 2021 |
| | | | | WO | 2021-126502 | A1 | 24 June 2021 |

Form PCT/ISA/210 (patent family annex) (July 2022)